# EUROPEAN PATENT SPECIFICATION

(11) **EP 4 401 099 B1**
(45) Date of publication and mention of the grant of the patent: **06.05.2026**
(21) Application number: 23806657.5
(22) Date of filing: 14.04.2023
(51) Int. Cl.: H01F 27/28, H01F 27/32, H01F 38/14, H02J 7/00, H02J 7/02, H02J 50/10, H02J 50/00, H01F 27/34

(54) **WIRELESS CHARGING COIL WINDING METHOD, ELECTRONIC DEVICE, AND COMMUNICATION SYSTEM**
SPULENWICKELVERFAHREN FÜR DRAHTLOSES LADEN, ELEKTRONISCHE VORRICHTUNG UND KOMMUNIKATIONSSYSTEM
PROCÉDÉ D'ENROULEMENT DE BOBINE DE CHARGE SANS FIL, DISPOSITIF ÉLECTRONIQUE ET SYSTÈME DE COMMUNICATION

(30) Priority: 20.05.2022 CN 202210550580
(43) Date of publication of application: 17.07.2024
(73) Proprietor: Honor Device Co., Ltd., Shenzhen, Guangdong 518040 (CN)
(72) Inventor: HUANG, Hua, Shenzhen, Guangdong 518040 (CN); ZHANG, Xialing, Shenzhen, Guangdong 518040 (CN); SONG, Jiaxiang, Shenzhen, Guangdong 518040 (CN)
(74) Representative: Gill Jennings & Every LLP
(86) International application number: PCT/CN2023/088341
(87) International publication number: WO 2023/221702

(56) References cited:
- EP-A1- 3 806 117
- CN-A- 104 184 217
- CN-A- 104 347 585
- CN-A- 107 146 700
- CN-A- 111 092 495
- CN-A- 112 802 665
- CN-A- 113 936 910
- CN-B- 108 922 744
- JP-A- 2001 325 574
- JP-A- 2019 140 223
- US-A1- 2019 058 349

## Description

This application claims priority to Chinese Patent Application No. 202210550580.6, filed with the China National Intellectual Property Administration on May 20, 2022 and entitled "WIRELESS CHARGING COIL WINDING METHOD, ELECTRONIC DEVICE, AND COMMUNICATION SYSTEM".

### TECHNICAL FIELD

This application relates to the field of terminals, and in particular, to a wireless charging coil winding method, an electronic device, and a communication system.

### BACKGROUND

With the development of a wireless charging technology, more electronic devices use the wireless charging technology. During implementation of the wireless charging technology, a transmitter coil disposed in a wireless charger is conducted with an alternating current of specific frequency, to generate an alternating magnetic field. A receiver coil disposed in an electronic device generates an induced current in the alternating magnetic field, and charges the electronic device. In other words, the wireless transceiver coils implement wireless power transmission through electromagnetic coupling.

However, due to limitation of a size of a receiver coil in a small-scale electronic device, there is a large difference in sizes of transceiver coils, and an electromagnetic coupling coefficient between the transceiver coils is low. This results in a small induced voltage generated in the small-scale electronic device and low charging efficiency. How to resolve the foregoing problem is currently a problem to be urgently resolved. Other previously proposed arrangements are disclosed in EP 3806117 A1, JP 2019140223 A, CN 111092495 A, CN 108922744 B and JP 2001325574 A.

### SUMMARY

The invention relates to a wireless charging coil as defined in independent claim 1. Further embodiments of the invention are defined in the dependent claims. The application further discloses a wireless charging coil winding method, an electronic device, and a communication system. In the wireless charging coil winding method, based on specifications of a coil to be designed, a coil of any quantity of layers and any quantity of turns can be obtained by using a combination of any one or more of the following manners: an N-layer 1-turn coil whose N layers of wires are wound in parallel, an N-layer N-turn coil whose N layers of wires are wound in series, an N-layer M-turn coil (N>M) whose N layers of wires are series-parallel-wound and a part of wires are wound in series, and the like. In this way, in a case in which a size of the coil is limited, a multi-layer multi-turn wound coil is designed, to improve wireless charging efficiency.

According to a first aspect, this application provides a wireless charging coil according to independent claim 1 . The inventive wireless charging coil includes K coils, wherein an i^{th} coil has a larger winding diameter than an (i+1)^{th} coil, and the (i+1)^{th} coil is located inside the i^{th} coil, where 1≤i≤K-1; and each of the K coils respectively includes N layers of wires, and a wire at a j^{th} layer of the i^{th} coil is on a same plane as a wire at a j^{th} layer of the (i+1)^{th} coil, where N≥j≥1. This wireless charging coil is characterized in that the K coils include at least two coils whose N layers of wires are series-parallel-wound and that are sequentially connected from an inner coil to an outer coil or from the outer coil to the inner coil, wherein a first coil of the at least two coils whose N layers of wires are series-parallel-wound comprises a first N layers of wires and a second coil of the at least two coils whose N layers of wires are series-parallel-wound comprises a second N layers of wires, a y^{th} layer of the first N layers of wires includes at least a first wire and a second wire, and a y^{th} layer of the second N layers of wires includes at least a third wire and a fourth wire. An outlet of a wire at a (y-1)^{th} layer of the first N layers of wires is connected to an inlet of a wire at a (y-1)^{th} layer of the second N layers of wires, an inlet of the wire at the (y-1)^{th} layer of the first N layers of wires is connected to an inlet of the first wire at the y^{th} layer of the first N layers of wires, the outlet of the wire at the (y-1)^{th} layer of the first N layers of wires is connected to an outlet of the first wire at the y^{th} layer of the first N layers of wires, the inlet of the wire at the (y-1)^{th} layer of the second N layers of wires is further connected to an inlet of the third wire at the y^{th} layer of the second N layers of wires, an outlet of the wire at the (y-1)^{th} layer of the second N layers of wires is connected to an outlet of the third wire at the y^{th} layer of the second N layers of wires, the outlet of the wire at the (y-1)^{th} layer of the second N layers of wires is further connected to an inlet of the fourth wire at the y^{th} layer of the second N layers of wires, an inlet of the second wire at the y^{th} layer of the first N layers of wires is connected to an inlet of a wire at a (y+1)^{th} layer of the first N layers of wires, an outlet of the second wire at the y^{th} layer of the first N layers of wires is connected to an outlet of the wire at the (y+1)^{th} layer of the first N layers of wires, the inlet of the fourth wire at the y^{th} layer of the second N layers of wires is connected to an inlet of a wire at a (y+1)^{th} layer of the second N layers of wires, an outlet of the fourth wire at the y^{th} layer of the second N layers of wires is connected to an outlet of the wire at the (y+1)^{th} layer of the second N layers of wires, the outlet of the fourth wire at the y^{th} layer of the second N layers of wires is further connected to the inlet of the wire at the (y+1)^{th} layer of the first N layers of wires, and the outlet of the wire at the (y+1)^{th} layer of the second N layers of wires is connected to the inlet of the wire at the (y+1)^{th} layer of the first N layers of wires, where N>y>1.

After implementing the method provided in the first aspect, in a case in which a size of the coil is limited, a multi-layer multi-turn wound coil is designed, and limited coil thickness space, a limited coil winding width, and the like can be fully used, to obtain an optimal impedance and Q value, reduce coil loss, and improve wireless charging efficiency. Additionally, the coil whose N layers of wires are series-parallel-wound may constitute a coil of more than one turn and less than N turns. In addition, when a coil is wound in a plurality of loops in an up-down direction, a 1-layer multi-loop coil may be first wound in a horizontal direction, another 1-layer multi-loop coil is wound in the horizontal direction in an outer loop, and the previous 1-layer multi-loop coil is connected to the next 1-layer multi-loop coil in a vertical direction from an upper layer to a lower layer or from the lower layer to the upper layer. This provides a plurality of new wiring manners, and further improves feasibility of the method in this application.

With reference to the wireless charging coil provided in the first aspect, remaining coils of the K coils include any one or more of the following coils: a coil whose N layers of wires are wound in parallel, a coil whose N layers of wires are wound in series, and a coil whose N layers of wires are series-parallel-wound.

In this way, based on a design requirement, a coil of any quantity of layers and any quantity of turns can be obtained by using a combination of any one or more of the three winding manners. The coil whose N layers of wires are wound in parallel may constitute a 1-turn coil, the coil whose N layers of wires are wound in series may constitute an N-turn coil, and the coil whose N layers of wires are series-parallel-wound.

With reference to the wireless charging coil provided in the first aspect, the remaining coils comprise the coil whose N layers of wires are wound in parallel, wherein in the coil whose N layers of wires are wound in parallel, inlets of wires at all layers are connected, and outlets of wires at all layers are connected.

In this way, the coil whose N layers of wires are wound in parallel can constitute a 1-turn coil, and a surface area of a plurality of wires is increased through parallel connection. Therefore, an impact of the skin effect can be reduced, and a flow capacity of the coil is improved.

With reference to the wireless charging coil provided in the first aspect, the remaining coils comprise the coil whose N layers of wires are wound in series, wherein the coil whose N layers of wires are wound in series includes: In the N layers of wires, an outlet of a wire at an x^{th} layer is connected to an inlet of a wire at an (x+1)^{th} layer, where 1≤x≤N-1. In this way, the coil whose N layers of wires are wound in series can constitute an N-turn coil. This increases a quantity of turns of the coil, and further increases an induced current of the coil. In addition, when a coil is wound in a plurality of loops in an in-out direction, a multi-layer coil may be first wound in a vertical direction, another multi-layer coil is wound in the vertical direction in an outer loop, and the previous multi-layer coil is connected to the next multi-layer coil in a horizontal direction from an inner loop to the outer loop or from the outer loop to the inner loop.

With reference to the wireless charging coil provided in the first aspect, the remaining coils include at least two coils whose N layers of wires are wound in series and that are sequentially connected from an inner coil to an outer coil or from the outer coil to the inner coil, wherein a first coil of the at least two coils whose N layers of wires are wound in series comprises a first N layers of wires and a second coil of the at least two coils whose N layers of wires are wound in series comprises a second N layers of wires, an outlet of a wire at an x^{th} layer of the first N layers of wires is connected to an inlet of a wire at an x^{th} layer of the second N layers of wires, an outlet of the wire at the x^{th} layer of the second N layers of wires is connected to an inlet of a wire at an (x+1)^{th} layer of the second N layers of wires, and an outlet of the wire at the (x+1)^{th} layer of the second N layers of wires is connected to an inlet of a wire at an (x+1)^{th} layer of the first N layers of wires, where 1≤x≤N-1.

In this way, the coil whose N layers of wires are wound in series can constitute an N-turn coil. This increases a quantity of turns of the coil, and further increases an induced current of the coil. In addition, when a coil is wound in a plurality of loops in an up-down direction, a 1-layer multi-loop coil may be first wound in a horizontal direction, another 1-layer multi-loop coil is wound in the horizontal direction in an outer loop, and the previous 1-layer multi-loop coil is connected to the next 1-layer multi-loop coil in a vertical direction from an upper layer to a lower layer or from the lower layer to the upper layer.

With reference to the wireless charging coil provided in the first aspect, a shape of the K coils includes: a circle, an ellipse, a racetrack, a rectangle, a triangle.

In this way, the wireless charging coil can be made into any shape, to meet requirements of different products on the specification of the wireless charging coil, and also improves a range of the wireless charging coil.

With reference to the wireless charging coil provided in the first aspect, each layer of the N layers of wires includes one wire or a plurality of wires.

In this way, a single-wire wound coil or multi-wire wound coil can be designed based on a wire diameter and design specifications of the coil such as thickness space and a width.

With reference to the wireless charging coil provided in the first aspect, an insulation layer is disposed between two adjacent layers of the N layers of wires. The insulation layer may be a printed circuit board (PCB), a flexible printed circuit (FPC), a rigid-flex board, or the like.

In this way, when the insulation layer is used, wire arrangement is more regular, fit, and stable. This facilitates full utilization of the thickness and the width space of the coil.

According to a second aspect, this application provides an electronic device. The electronic device includes the wireless charging coil according to the first aspect.

According to a third aspect, this application provides a communication system, including a charging device and a terminal. The charging device includes the wireless charging coil according to the first aspect, the terminal includes the wireless charging coil according to the first aspect, and the wireless charging coil of the charging device is configured to send a signal to the wireless charging coil of the terminal.

### BRIEF DESCRIPTION OF DRAWINGS

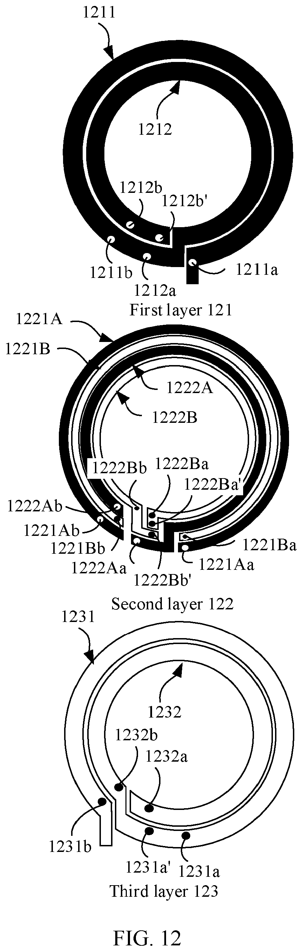

In the following, only Fig. 12 concerns an embodiment of the invention. The remaining embodiments are mere examples useful for the understanding of the invention.
FIG. 1 is a schematic diagram of a wireless charging system according to an embodiment of this application;
FIG. 2 is a schematic diagram of a principle of wireless charging according to an embodiment of this application;
FIG. 3 is a schematic diagram of a winding manner of a 3-layer 1-turn coil according to an embodiment of this application;
FIG. 4 is a schematic diagram of a winding manner of a 3-layer 3-turn coil according to an embodiment of this application;
FIG. 5A is a schematic diagram of a winding manner of a 3-layer 2-turn coil according to an embodiment of this application;
FIG. 5B is a schematic diagram of another winding manner of a 3-layer 2-turn coil according to an embodiment of this application;
FIG. 6 is a schematic diagram of a winding manner of a 4-layer 1-turn coil according to an embodiment of this application;
FIG. 7 is a schematic diagram of a winding manner of a 4-layer 4-turn coil according to an embodiment of this application;
FIG. 8A is a schematic diagram of a winding manner of a 4-layer 3-turn coil according to an embodiment of this application;
FIG. 8B is a schematic diagram of another winding manner of a 4-layer 3-turn coil according to an embodiment of this application;
FIG. 9 is a schematic diagram of a structure of a 3-layer 12-turn wound coil according to an embodiment of this application;
FIG. 10 is a schematic diagram of a structure of a 4-layer 18-turn wound coil according to an embodiment of this application;
FIG. 11 is a schematic diagram of a structure of a 3-layer 6-turn wound coil according to an embodiment of this application;
FIG. 12 is a schematic diagram of a structure of a 3-layer 4-turn wound coil according to the invention;
FIG. 13 is a schematic diagram of a hardware structure of an electronic device according to an embodiment of this application; and
FIG. 14 is a schematic diagram of a hardware structure of a wireless charger according to an embodiment of this application.

### DESCRIPTION OF EMBODIMENTS

The following clearly and completely describes technical solutions in embodiments of this application with reference to the accompanying drawings. In the descriptions of embodiments of this application, unless otherwise specified, "/" means "or", for example, A/B may mean A or B. In this specification, "and/or" merely describes an association relationship between associated objects, and represents that three relationships may exist. For example, A and/or B may represent the following cases: Only A exists, both A and B exist, and only B exists.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more of the features. In the descriptions of embodiments of this application, unless otherwise specified, "a plurality of" means two or more.

An "embodiment" in this application means that a specific feature, structure, or characteristic described with reference to the embodiment may be included in at least one embodiment of this application. The term appearing at various positions in the specification does not necessarily refer to a same embodiment, or an independent or alternative embodiment mutually exclusive with another embodiment. It is explicitly and implicitly understood by a person skilled in the art that the embodiments described in this application may be combined with another embodiment. The invention is only defined and limited by the appended claims.

**The following first describes a communication system in which the wireless charging coil provided in this application is used.**

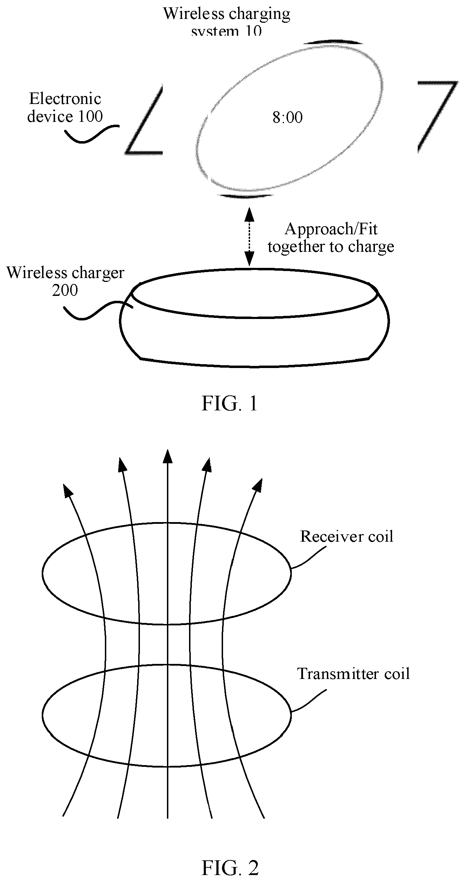

FIG. 1 is an example of a schematic diagram of a wireless charging system 10 according to an embodiment of this application.

As shown in FIG. 1, the wireless charging system 10 includes an electronic device 100 and a wireless charger 200.

Specifically, the electronic device 100 may be a mobile phone, a watch, a toothbrush, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device that are/is equipped with a receiver coil. A specific type of the electronic device 100 is not specifically limited in this embodiment of this application.

Specifically, the wireless charger may be a device equipped with a transmitter coil. For example, a form of the wireless charger 200 may be a disc shaped base or a cylindrical electric pile. This is not specifically limited in this embodiment of this application.

In some embodiments of this application, the transmitter coil and the receiver coil may also be referred to as a wireless charging coil.

In the wireless charging system 10 provided in this application, the wireless charger 200 may establish a wireless communication connection with the receiver coil of the electronic device 100 through the transmitter coil to perform wireless power transmission. Specifically, refer to a schematic diagram of a principle of wireless charging shown in FIG. 2.

FIG. 2 shows an example of a principle of wireless charging based on the transmitter coil and the receiver coil.

The transmitter coil and the receiver coil are respectively disposed in the wireless charger 200 and the electronic device 100 that needs to be charged. When the wireless charger 200 and the electronic device 100 approach each other or fit together, the transmitter coil of the wireless charger 200 generates a magnetic field (whose magnetic field lines are shown by arrows in FIG. 2) under action of an alternating current of specific frequency, and the receiver coil of the electronic device generates a specific current due to electromagnetic induction, so that electrical energy is transferred from the wireless charger 200 to the electronic device 100 to implement charging of the electronic device.

When wireless power transmission is performed by using the technology of electromagnetic induction, the receiver coil can sense voltage of a specific value to enable a chip in the electronic device 100 for charging only when an electromagnetic coupling coefficient between the transmitter coil and the receiver coil is high. The coupling coefficient between the transmitter coil and the receiver coil is influenced by factors such as a ratio of coil sizes, coil spacing, and whether the coils are aligned. Generally, to obtain a high coupling coefficient (approximately 0.75) and high transmission efficiency, it needs to be ensured that a size of the receiver coil is close to a size of the transmitter coil, or is slightly larger than the size of the transmitter coil. Currently, in the wireless charging standard (QI) proposed by the wireless power consortium (Wireless Power Consortium, WPC), parameters of transmitter coils are specified to ensure compatibility between devices that meet QI specifications. Common transmitter coils used in the market are MPA-2 coils and A11a coils, where a diameter of the MPA-2 coil is approximately 48 mm, and a diameter of the A11a coil is approximately 44 mm. However, with sizes of some portable electronic devices 100 being manufactured smaller, the size of the receiver coil is limited correspondingly. Consequently, a difference between sizes of the transmitter coil and the receiver coil becomes larger, causing the coupling coefficient between the transmitter coil and the receiver coil to become lower (approximately 0.4 to 0.5). This further influences power transmission efficiency between the transmitter coils, and reduces an induced voltage and charging efficiency at the electronic device 100 end.

Specifically, for the foregoing technical problem, refer to the following example:
An example in which the electronic device 100 is a smartwatch is used. Design specifications of a wireless charging coil of the smartwatch are usually as follows: An inner diameter is 10 millimeters (mm), an outer diameter is 14.5 mm, and a thickness is 0.45 mm. The thickness of 0.45 mm includes a magnetic material thickness which is 0.1 mm, and an adhesive layer thickness which is 0.1 mm. Therefore, only space of a thickness of 0.25 mm and a width of 4.5 mm can be used for winding. This means that the coil can be designed to use a wire material of a maximum diameter of 0.25 mm. When a single wire of 0.25 mm is wound, although the thickness space is used, if the coupling coefficient is to be affected as slightly as possible, the entire winding width of 4.5 mm needs to be fully used. In this case, the quantity of turns is limited to 18, and a quantity of turns expected by a researcher cannot be designed. When a plurality of thin wires with a smaller diameter are wound in parallel, although the winding width can be fully used due to winding performance of the thin wire, because an impedance of the thin wire is excessively large, heating of the coil consumes electrical energy, and charging efficiency is still reduced. In addition, flatness of the coil wound by using a plurality of thin wires is poor. In this case, to implement firm adhesion between the wire and the flexible magnetic material, a thicker double-sided tape (a thickness of a double-sided tape is usually 30 to 100 µm) has to be used, and the thickness space of the coil is further sacrificed. Finally, existing wire-wound coils can be only designed to regular shapes (for example, a circle, an ellipse, a racetrack, and a rectangle), and cannot be designed to a shape at will.

To resolve the foregoing problem, this application provides a wireless charging coil winding method, an electronic device, and a communication system. In the wireless charging coil winding method, based on specifications (for example, coil thickness space and a coil winding width) of a coil to be designed, a coil of any quantity of layers and any quantity of turns can be obtained through combination in any one or more of the following manners: an N-layer 1-turn coil whose N layers of wires are wound in parallel, an N-layer N-turn coil whose N layers of wires are wound in series, an N-layer M-turn coil (N>M) whose N layers of wires are series-parallel-wound, and the like. In this way, in a case in which a size of the coil is limited, a multi-layer multi-turn wound coil is designed, and the limited coil thickness space, coil winding width, and the like can be fully used, to obtain an optimal impedance and quality factor (Q value), reduce coil loss, and improve wireless charging efficiency.

In addition, the wireless charging coil winding method provided in this application is applicable not only to a wireless charging scenario, but also to other scenarios in which the principle of electromagnetic induction is used. For example, electromagnetic signal transmission in NFC antennas may be implemented by using the wireless charging coil winding method provided in this application.

Terms involved in this application are first explained below:

### (1) Thickness space

The thickness space may be understood as a height of a cylindrical coil, a cuboid coil, or a coil of any other shape. A winding width of the coil may be understood as an area included by an inner diameter and an outer diameter in a bottom of the cylindrical coil, the cuboid coil, or the coil of any other shape.

### (2) Layer

The layer means a quantity of planes in which wires included in a coil are arranged, where the coil is constituted in the winding method provided in this application. When all wires included in a coil are wound on a same plane to form a flat coil, the coil is a 1-layer wound coil. When all wires included in a coil are not arranged on a same plane, for example, one wire is wound on a first plane, a tail end of the 1^{st} wire is connected to a head end of the 2^{nd} wire, and the 2^{nd} wire is wound on a second plane, this indicates that the coil is a 2-layer wound coil. The wire means a quantity of wires included in the coil constituted in the winding method provided in this application. It should be noted that, although the two wires at the two layers are connected head-to-tail, and can constitute a connected wire, the quantity of wires is still calculated by using two wires as an example in this application.

### (3) Quantity of turns

The quantity of turns means a quantity of winding turns of a wire in each coil. It should be noted that, the quantity of layers only equals to the quantity of wires when wires are not wound in parallel in the coil (there is no case in which head ends and tail ends of wires are both connected in parallel). When wires of any quantity are wound one turn in parallel, the quantity of turns of the coil is still one.

### (4) Coil specification

Coil specifications are different in different usage scenarios. For example, coil specifications in devices such as smartwatches, mobile phones, and computers are all different. When a size of a device is limited, a size of a coil in the device is also limited correspondingly. Therefore, in some electronic devices that have high requirements on the coil specifications and in which sizes of coils are limited, the wireless charging coil winding method provided in this application can be used. The quantity of layers, the quantity of turns, and the like are preset by researchers based on specific usage scenarios. The quantity of layers, the quantity of turns, and the like are not limited in embodiments of this application.

In a wireless charging coil winding method provided in this application, the winding method mainly means a method of wiring between layers for wires arranged at all layers in an N-layer wound coil designed based on a circuit board, rather than a simple winding method provided by an existing wound coil. Specifically, for the method of wiring between layers for wires arranged at all layers, refer to three winding methods described below.

When the wireless charging coil winding method, the electronic device, and the communication system provided in this application are implemented, by using the design of multi-layer wound coil, the coil thickness space and the coil winding width can be both fully used in limited space, to obtain an optimal Q value and impedance. In this way, coil loss is reduced, electrical energy transmission efficiency between wireless charging systems is improved, and charging efficiency of the electronic device is improved. In addition, coil heating is reduced, product security is considered, and user experience on wireless charging is improved in all aspects. Moreover, the multi-layer wound coil provided in this application may be designed based on the circuit board. A coil designed based on the circuit board is flat, and usually only needs an adhesive layer of 10 to 30 µm to implement adhesion between the winding wire and the flexible magnetic material, which facilitates reducing a body thickness by a device using the coil. In addition, a shape of the coil designed based on the circuit board can be manufactured into an irregular shape based on an actual requirement, and a limitation in which an existing wound coil can only be designed to a circular or rectangular coil is lifted.

The following specifically describes the three winding manners provided in embodiments of this application: N layers of wires are wound in parallel, N layers of wires are wound in series, and N layers of wires are series-parallel-wound. Details are as follows:

**Winding manner 1: Coil whose N layers of wires are wound in parallel.** Specifically, wires arranged at the N layers are wound one turn in parallel in an up-down direction, and an N-layer 1-turn coil can be implemented.

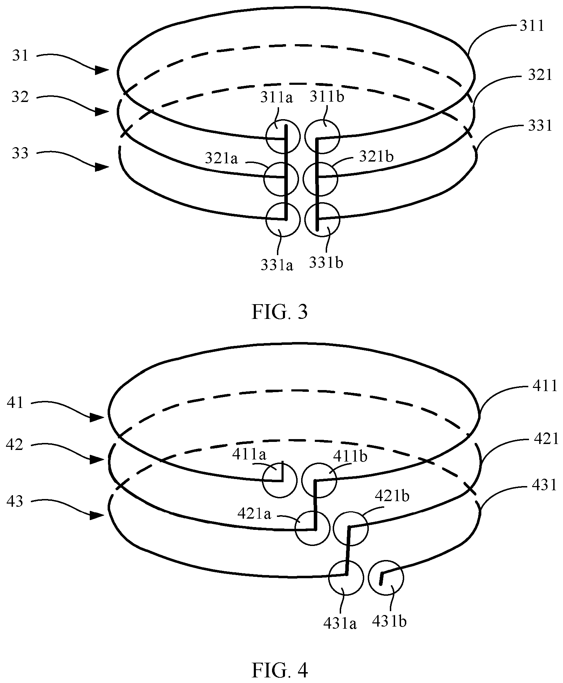

Refer to FIG. 3. This embodiment of this application is shown by using an example in which N=3 and three wires at three layers are wound in parallel in the up-down direction to constitute a 1-turn coil.

As shown in FIG. 3, the winding method includes three layers of wound coils which are respectively a first layer wound coil 31, a second layer wound coil 32, and a third layer wound coil 33 from top to bottom. The first layer wound coil 31 is wound by using a first wire 311, and the first wire 311 includes a first end 311a and a second end 311b. The second layer wound coil 32 is wound by using a second wire 321, and the second wire 321 includes a first end 321a and a second end 321b. The third layer wound coil 33 is wound by using a third wire 331, and the third wire 331 includes a first end 331a and a second end 331b. The first end 311a of the first wire 311 is connected to the first end 321a of the second wire 321 and the first end 331a of the third wire 331, and the second end 311b of the first wire 311 is connected to the second end 321b of the second wire 321 and the second end 331b of the third wire 331. From top to bottom starting from the first layer wound coil 31, head ends of wires at all layers are connected in parallel, and tail ends are also connected in parallel, and the wires are wound in a same direction (for example, clockwise), to constitute the 3-layer 1-turn coil. This ensures that when a current is generated in the coil due to electromagnetic induction, the current flows in a same direction in the wires at the three layers of the wound coil.

It may be understood that, each layer is not limited to including only one wire as shown in FIG. 3. Each layer may alternatively include stranded wires including a plurality of wires wound in parallel.

Optionally, by using the winding method in the manner 1, the wire can be wound clockwise from the inlet to the outlet according to FIG. 3, and alternatively, can be wound counterclockwise from the inlet to the outlet. This is not limited in this embodiment of this application.

Optionally, the coil shown in FIG. 3 further includes a plurality of interlayer insulation layers (not shown in FIG. 3), and each interlayer insulation layer is located between two adjacent layers of wound coils. For example, in this embodiment of this application, interlayer insulation layers may be disposed between the first layer wound coil 31 and the second layer wound coil 32, and between the second layer wound coil 32 and the third layer wound coil 33.

In some embodiments of this application, the interlayer insulation layer may be a printed circuit board (Printed Circuit Board, PCB), a flexible printed circuit (Flexible Printed Circuit, FPC), or a rigid-flex board. This is not limited in this application.

By using the coil wound by using a 3-layer 3-coil wound coil as shown in FIG. 3, when a current of high frequency flows through the wire, due to the skin effect, the farther away from a surface of the wire (that is, inside the wire), the smaller the current. In other words, in a cross-section vertical to a direction of the current, current intensity at a center of the circle is basically 0, and the farther away from the center of the circle, the larger the current. The skin effect is generated mainly because the alternating electromagnetic field generates an electric vortex field inside the wire, and cancels out the original current. Therefore, in specific space, the more wires used, the larger a surface area, and the larger the current, so that phenomena of wire heating or electric energy attenuation are reduced. Therefore, using the manner in which a plurality of wires are wound in parallel can greatly reduce the skin effect, and cause the current to generate a uniform magnetic field. In common words, the current is provided with a "skin" path with a larger area, so that electric energy loss during wireless power transmission from the wireless charger 200 to the electronic device 100 is reduced.

**Winding manner 2: Coil whose N layers of wires are wound in series.** Specifically, wires arranged at the N layers are wound N turns in series in an up-down direction, and an N-layer N-turn coil can be implemented.

Refer to FIG. 4. This embodiment of this application is shown by using an example in which N=3 and three wires at three layers are wound in series in the up-down direction to constitute a 3-turn coil.

As shown in FIG. 4, the winding method includes three layers of wound coils which are respectively a first layer wound coil 41, a second layer wound coil 42, and a third layer wound coil 43 from top to bottom. The first layer wound coil 41 is wound by using a first wire 411, and the first wire 411 includes a first end 411a and a second end 411b. The second layer wound coil 42 is wound by using a second wire 421, and the second wire 421 includes a first end 421a and a second end 421b. The third layer wound coil 43 is wound by using a third wire 431, and the third wire 431 includes a first end 431a and a second end 431b. The second end 411b of the first wire 411 is connected to the first end 421a of the second wire 421, and the second end 421b of the second wire 421 is connected to the third wire 431a. From top to bottom starting from the first layer wound coil 41, a tail end of a wire at an upper layer is connected to a head end of a wire at a lower layer in sequence, and the wires are wound in a same direction (for example, clockwise), to constitute the 3-layer 3-turn coil. This ensures that when a current is generated in the coil due to electromagnetic induction, the current flows in a same direction in the wires at the three layers of the wound coil.

Optionally, by using the winding method in the manner 2, the coil can be wound clockwise from the upper layer to the lower layer according to FIG. 4, and alternatively, can be wound counterclockwise from the upper layer to the lower layer, can be wound clockwise from the lower layer to the upper layer, and can be wound counterclockwise from the lower layer to the upper layer. This is not limited in this embodiment of this application.

Optionally, the coil shown in FIG. 4 further includes a plurality of interlayer insulation layers (not shown in FIG. 4), and each interlayer insulation layer is located between two adjacent layers of wound coils. For example, in this embodiment of this application, interlayer insulation layers may be disposed between the first layer wound coil 41 and the second layer wound coil 42, and between the second layer wound coil 42 and the third layer wound coil 43. The interlayer insulation layer may use the flexible insulating film material, for example, the FPC, described above.

It may be understood that, each layer is not limited to including only one wire as shown in FIG. 4. Each layer may alternatively include stranded wires including a plurality of wires wound in parallel.

By using the coil wound by using three wires at three layers in series as shown in FIG. 4, in comparison with a single-layer coil or a multi-layer parallel-wound coil, in unit area, the multi-layer coil whose wires are wound in series has more turns, and generates greater induced electromotive force, so that an induced current in the coil is larger, and charging efficiency of an electronic device 100 using the coil can be improved. Particularly, using the multi-layer coil provided in the manner 2 in an area with strong magnetic field helps improve inductance of the coil, thereby improving a Q value, and reducing coil loss.

It can be learned by comparing the winding manner 1 and the winding manner 2 that, in the winding manner 1, head ends and tail ends of wires at all layers in the plurality of wires are connected, to constitute a single-turn coil whose wires at a plurality of layers are wound in parallel. When a current flows through this type of coil, electric energy loss brought due to the skin effect can be reduced, and a flow capacity of the wire can be improved. In the winding manner 2, a head end of a wire at each layer is connected to a tail end of a wire at an upper layer in a plurality of layers of wires, to constitute a multi-turn coil whose wires at a plurality of layers are wound in series. When this type of coil is placed in an alternating magnetic field, because the coil has more turns, the coil can generate greater induced electromotive force, so that an induced current in the coil is larger, and charging efficiency of an electronic device 100 using the coil is further improved. Therefore, when a plurality of coils are wound from an inner loop to an outer loop by using both the winding manner 1 and the winding manner 2, a coil using the winding manner 1 may be disposed in an area with non-uniform magnetic field and current distribution, to improve a flow capacity of the coil. For example, the coil using the winding manner 1 is disposed in the innermost loop and/or the outermost loop with the strongest magnetic field in the plurality of coils, to reduce electric energy loss, and improve coil efficiency. Correspondingly, a coil using the winding manner 2 may be disposed in an intermediate loop in the plurality of coils.

**Winding manner 3: Coil whose N layers of wires are partially wound in series and partially wound in parallel.**

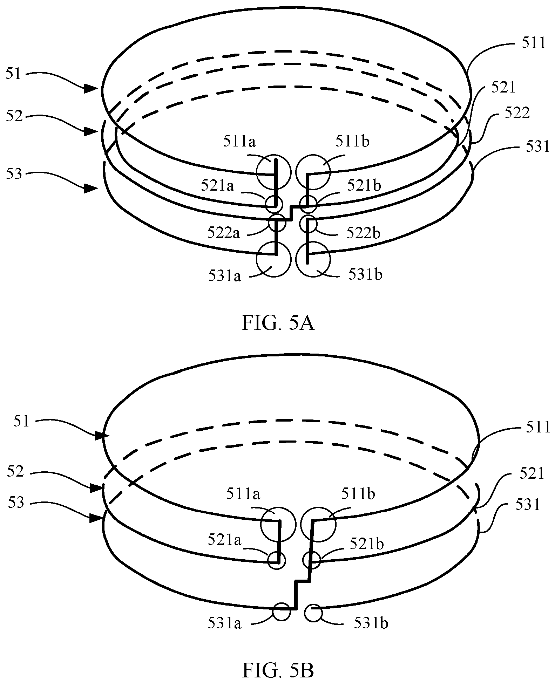

Refer to FIG. 5A. This embodiment of this application is shown by using an example in which N=3 and four wires at three layers are wound in series in the up-down direction to constitute a 2-turn coil.

As shown in FIG. 5A, the winding method includes three layers of wound coils which are respectively a first layer wound coil 51, a second layer wound coil 52, and a third layer wound coil 53 from top to bottom. The first layer wound coil 51 is wound by using a first wire 511, and the first wire 511 includes a first end 511a and a second end 511b. The second layer wound coil 52 is wound by using a second wire 521 and a third wire 522, the second wire 521 includes a first end 521a and a second end 521b, and the third wire 522 includes a first end 522a and a second end 522b. The third layer wound coil 53 is wound by using a third wire 531, and the third wire 531 includes a first end 531a and a second end 531b. The first end 511a of the first wire 511 is connected to the first end 521a of the second wire 521, the second end 521b of the second wire 521 is connected to the first end 522a of the third wire 522, and the first end 522a of the third wire 522 is connected to the first end 531a of the fourth wire 531. The second end 511b of the first wire 511 is connected to the second end 521b of the second wire 521, and the second end 522b of the third wire is connected to the second end 531b of the fourth wire 531. In other words, the head end of the first wire 511 is connected to the head end of the second wire 521 in parallel in an up-down direction, the tail end of the first wire 511 is connected to the tail end of the second wire 521 in parallel in the up-down direction, the tail end of the second wire 521 is connected to the head end of the third wire 522 in series, the head end of the third wire 522 is connected to the head end of the fourth wire 531 in parallel in the up-down direction, and the tail end of the third wire 522 is connected to the tail end of the fourth wire 531 in parallel in the up-down direction. In this way, in the 3-layer wound coil, the wire at the first layer and one of the wires at the second layer are connected in parallel and wound one turn, then the tail end of the wire at the second layer is connected to the head end of the other wire at the second layer and wound one turn, and the wire at the third layer is connected to the other wire at the second layer in parallel and wound one turn, to implement the 2-turn coil wound by using four wires at three layers. From top to bottom starting from the first layer wound coil 51, the wires arranged at all layers are wound in a same direction (for example, clockwise). This ensures that when a current is generated in the coil due to electromagnetic induction, the current flows in a same direction in the wires at the three layers of the wound coil.

Optionally, by using the winding method in the manner 3, the coil can be wound clockwise from the upper layer to the lower layer according to FIG. 5A, and alternatively, can be wound counterclockwise from the upper layer to the lower layer, can be wound clockwise from the lower layer to the upper layer, and can be wound counterclockwise from the lower layer to the upper layer. This is not limited in this embodiment of this application.

Optionally, the coil shown in FIG. 5A further includes a plurality of interlayer insulation layers (not shown in FIG. 5A), and each interlayer insulation layer is located between two adjacent layers of wound coils. For example, in this embodiment of this application, interlayer insulation layers may be disposed between the first layer wound coil 51 and the second layer wound coil 52, and between the second layer wound coil 52 and the third layer wound coil 53. The interlayer insulation layer may use the flexible insulating film material, for example, the FPC, described above.

It may be understood that, each layer is not limited to including only one wire as shown in FIG. 5A. Each layer may alternatively include stranded wires including a plurality of wires wound in parallel.

Refer to FIG. 5B. This embodiment of this application is shown by using an example in which N=3 and three wires at three layers are series-parallel-wound to constitute a 2-turn coil.

As shown in FIG. 5B, the winding method includes three layers of wound coils which are respectively a first layer wound coil 51, a second layer wound coil, and a third layer wound coil 53 from top to bottom. The first layer wound coil 51 is wound by using a first wire 511, and the first wire 511 includes a first end 511a and a second end 511b. The second layer wound coil 52 is wound by using a second wire 521, and the second wire 521 includes a first end 521a and a second end 521b. The third layer wound coil 53 is wound by using a fourth wire 531, and the fourth wire 531 includes a first end 531a and a second end 531b. The first end 511a of the first wire 511 is connected to the first end 521a of the second wire 521, the second end 511b of the first wire 511 is connected to the second end 521b of the second wire 521, and the second end 521b of the second wire 521 is connected to the first end 531a of the fourth wire 531. In other words, wires at the first n layers of the N layers are connected in parallel, to be specific, inlets of the wires are connected, and outlets are also connected. Then, wires outside the n layers are connected in series, to be specific, an outlet of a wire at the lowest layer of the first n layers is connected to an inlet of a wire at the next layer.

By using the coil wound by using four wires at three layers as shown in FIG. 5A above, in comparison with using a single-wire coil, because a two-wire coil wound by using the first wire 511 and the second wire 521 in parallel and a two-wire coil wound by using the third wire 522 and the fourth wire 531 are used, power loss brought due to the skin effect is reduced, and wireless power transmission efficiency is improved. In addition, by further implementing a 2-turn coil by winding the tail end of the second wire 521 and the head end of the third wire in series, in comparison with a single-layer 1-turn coil, in unit area, the 2-turn coil has more turns, and generates greater induced electromotive force, so that an induced current in the coil is larger, and charging efficiency of an electronic device 100 using the coil can be improved.

It can be learned that, when a 3-layer wound coil is to be designed, any one of the 3-layer 1-turn coil in the manner 1, the 3-layer 3-turn coil in the manner 2, and the 3-layer 2-turn coil in the manner 3 in the foregoing three manners, or any combination of a plurality of the coils may be used, to obtain a 3-layer A-turn coil. A may be an integer greater than or equal to 1, and A=k₁+k₂*3+k₁*2. k₁ is a quantity of coils wound in the manner 1 in the 3-layer wound coil, k₂ is a quantity of coils wound in the manner 2 in the 3-layer wound coil, and k₃ is a quantity of coils wound in the manner 3 in the 3-layer wound coil. Values of k₁, k₂, and k₂ are determined based on a plurality of factors such as a winding area, a diameter of a used wire, and winding performance of a to-be-designed coil. When the winding area is large, a thin wire is used, or the winding performance of the wire is good, the values of k₁, k₂, and k₂ are correspondingly large, and the quantity of turns A of the designed coil is large. The following provides examples of winding manners used when designing 3-layer coils with different quantity of turns.

For example, when A is 1, only the manner 1 may be used.

For another example, when A equals to 2, only the manner 2 may be used; or the manner 1 may be used twice, where to be specific, a 3-layer 1-turn coil is used as an inner loop, and is connected to a 3-layer 1-turn coil used as an outer loop in series, to constitute a 3-layer 2-turn coil.

For another example, when A equals to 3, only the manner 2 may be used; or the manner 1 may be used three times, where to be specific, a 3-layer 1-turn coil is used as the innermost loop, then is connected to a 3-layer 1-turn coil used as the intermediate loop in series, and finally is connected to a 3-layer 1-turn coil used as the outermost loop in series, to constitute a 3-layer 3-turn coil; or the manner 1 and the manner 3 may be used in combination, where to be specific, a 3-layer 1-turn coil is used as the innermost/outermost loop, and is then connected to a 3-layer 2-turn coil used as the outer/inner loop in series, to constitute a 3-layer 3-turn coil.

For another example, when A equals to 4, the manner 1 and the manner 2 may be used in combination, where to be specific, a 3-layer 1-turn coil is used as the innermost/outermost loop, and is then connected to a 3-layer 3-turn coil used as the outer/inner loop in series, to constitute a 3-layer 4-turn coil; or the manner 3 may be used twice, where to be specific, a 3-layer 2-turn coil is used as the outer/inner loop, and is connected to a 3-layer 2-turn coil used as the inner/outer loop in series.

In conclusion, when a 3-layer wound coil is to be designed, any one or any combination of a plurality of the foregoing three manners may be used to implement the 3-layer A-turn coil, where A may be any integer greater than or equal to 1. Examples are not exhausted herein.

It may be understood that, the foregoing three coil winding manners shown in FIG. 3 to FIG. 5B are all described by using an example in which an odd quantity of layers are used, to be specific, a 3-layer wound coil when N=3 is used. In this embodiment of this application, a quantity of layers of the wound coil is not limited, and may be specifically determined based on thickness space left for the wound coil and a diameter of a used wire. For example, when thickness space of a to-be-designed coil is limited, or a thick wire needs to be used, the quantity of layers needs to be designed for the coil is small; on the contrary, when thickness space of the to-be-designed coil is adequate, or a thin wire is used, to fully use the thickness space, the quantity of layers needs to be designed for the coil may be large. In some other embodiments of this application, when the quantity of winding layers N is an integer greater than 3, for example, N=4, 5, 6, 7, 8, or the like, the foregoing three winding manners are still applicable. Particularly, when N=2, only the manner 1 and the manner 2 are applicable. The manner 3 is applicable only to wound coils whose quantity of layers is greater than or equal to 3.

**Next, the foregoing three winding manners are simply described by using an example in which there are an even quantity of layers, for example, N=4.**

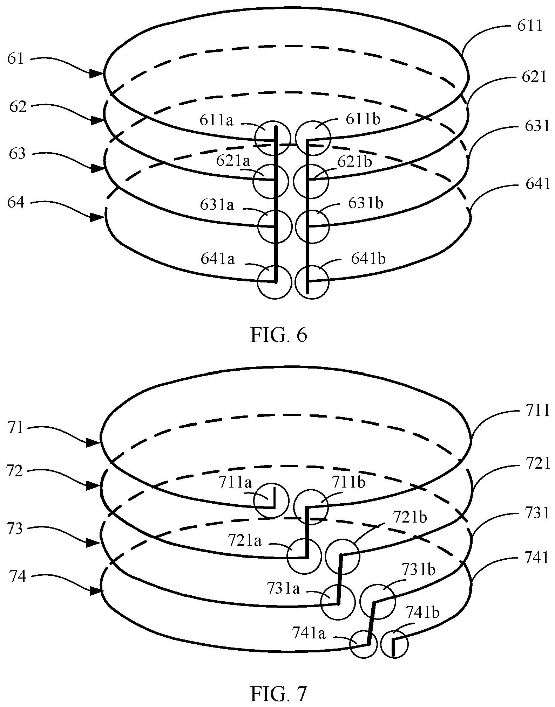

**Winding manner 1: Coil whose N layers of wires are wound in parallel.** Refer to FIG. 6. An example in which N=4 and four wires at four layers are wound in parallel in the up-down direction to constitute a 1-turn coil is used for description.

As shown in FIG. 6, the winding method includes four layers of wound coils which are respectively a first layer wound coil 61, a second layer wound coil 62, a third layer wound coil 63, and a fourth layer wound coil 64 from top to bottom. The first layer wound coil 61 is wound by using a first wire 611, and the first wire 611 includes a first end 611a and a second end 611b. The second layer wound coil 62 is wound by using a second wire 621, and the second wire 621 includes a first end 621a and a second end 621b. The third layer wound coil 63 is wound by using a third wire 631, and the third wire 631 includes a first end 631a and a second end 631b. The fourth layer wound coil 64 is wound by using a fourth wire 641, and the fourth wire 641 includes a first end 641a and a second end 641b. The first end 611a of the first wire 611 is connected to the first end 621a of the second wire 621, the first end 631a of the third wire 631, and the first end 641a of the fourth wire 641; and the second end 611b of the first wire 611 is connected to the second end 621b of the second wire 621, the second end 631b of the third wire 631, and the second end 641b of the fourth wire 641. From top to bottom starting from the first layer wound coil 61, head ends of wires at all layers are connected in parallel, and tail ends are also connected in parallel, and the wires are wound in a same direction (for example, clockwise), to constitute the 4-layer 1-turn coil. This ensures that when a current is generated in the coil due to electromagnetic induction, the current flows in a same direction in the wires at the three layers of the wound coil.

It may be understood that, each layer is not limited to including only one wire as shown in FIG. 6. Each layer may alternatively include stranded wires including a plurality of wires wound in parallel.

**Winding manner 2: Coil whose N layers of wires are wound in series.** Refer to FIG. 7. This embodiment of this application is shown by using an example in which N=4 and four wires at four layers are wound in series in the up-down direction to constitute a 4-turn coil.

As shown in FIG. 7, the winding method includes four layers of wound coils which are respectively a first layer wound coil 71, a second layer wound coil 72, a third layer wound coil 73, and a fourth layer wound coil 74 from top to bottom. The first layer wound coil 71 is wound by using a first wire 711, and the first wire 711 includes a first end 711a and a second end 711b. The second layer wound coil 72 is wound by using a second wire 721, and the second wire 721 includes a first end 721a and a second end 721b. The third layer wound coil 73 is wound by using a third wire 731, and the third wire 731 includes a first end 731a and a second end 731b. The fourth layer wound coil 74 is wound by using a fourth wire 741, and the fourth wire 741 includes a first end 741a and a second end 741b. The second end 711b of the first wire 711 is connected to the first end 721a of the second wire 721 in series, the second end 721b of the second wire 721 is connected to the first end 731a of the third wire 731 in series, and the second end 731b of the third wire 731 is connected to the first end 741a of the fourth wire 741 in series. From top to bottom starting from the first layer wound coil 71, a tail end of a wire at an upper layer is connected to a head end of a wire at a lower layer in sequence, and the wires are wound in a same direction (for example, clockwise), to constitute the 4-layer 4-turn coil. This ensures that when a current is generated in the coil due to electromagnetic induction, the current flows in a same direction in the wires at the three layers of the wound coil.

It may be understood that, each layer is not limited to including only one wire as shown in FIG. 7. Each layer may alternatively include stranded wires including a plurality of wires wound in parallel.

**Winding manner 3: Coil whose N layers of wires are partially wound in series and partially wound in parallel.**

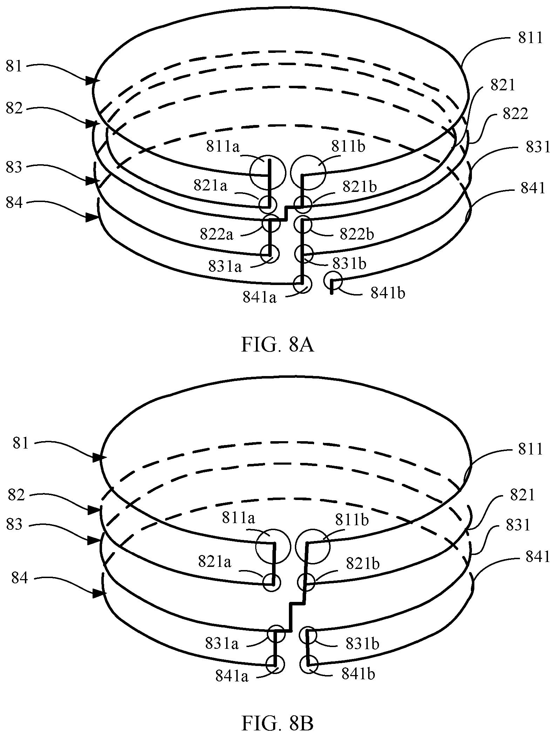

Refer to FIG. 8A. This embodiment of this application is shown by using an example in which N=4 and five wires at four layers are series-parallel-wound to constitute a 3-turn coil.

As shown in FIG. 8A, the winding method includes four layers of wound coils which are respectively a first layer wound coil 81, a second layer wound coil 82, a third layer wound coil 83, and a fourth layer wound coil 84 from top to bottom. The first layer wound coil 81 is wound by using a first wire 811, and the first wire 811 includes a first end 811a and a second end 811b. The second layer wound coil 82 is wound by using a second wire 821 and a third wire 822, the second wire 821 includes a first end 821a and a second end 821b, and the third wire 822 includes a first end 822a and a second end 822b. The third layer wound coil 83 is wound by using a fourth wire 831, and the fourth wire 831 includes a first end 831a and a second end 831b. The fourth layer wound coil 84 is wound by using a fifth wire 841, and the fifth wire 841 includes a first end 841a and a second end 841b. The first end 811a of the first wire 811 is connected to the first end 821a of the second wire 821, the second end 811b of the first wire 811 is connected to the second end 821b of the second wire 821, the second end 821b of the second wire 821 is connected to the first end 822a of the third wire 822, the first end 822a of the third wire 822 is connected to the first end 831a of the fourth wire 831, and the second end 822b of the third wire is connected to the second end 831b of the fourth wire 831. The second end 831b of the fourth wire 831 is connected to the first end 841a of the fifth wire 841. In other words, the head end of the first wire 811 is connected to the head end of the second wire 821 in parallel in an up-down direction, the tail end of the first wire 811 is connected to the tail end of the second wire 821 in parallel in the up-down direction, the tail end of the second wire 821 is connected to the head end of the third wire 822 in series, the head end of the third wire 822 is connected to the head end of the fourth wire 831 in parallel in the up-down direction, the tail end of the third wire 822 is connected to the tail end of the fourth wire 831 in parallel in the up-down direction, and the tail end of the fourth wire 831 is connected to the head end of the fifth wire 841 in series. In this way, in the 4-layer wound coil, the wire at the first layer and one of the wires at the second layer are connected in parallel and wound one turn, then the tail end of the wire at the first layer is connected to the head end of the other wire at the second layer and wound one turn, the wire at the third layer is connected to the other wire at the second layer in parallel and wound one turn, and the tail end of the other wire at the third layer is connected to a head end of one of the wires at the fourth layer and wound one turn, to implement the 3-turn coil wound by using five wires at four layers. From top to bottom starting from the first layer wound coil 81, the wires arranged at all layers are wound in a same direction (for example, clockwise). This ensures that when a current is generated in the coil due to electromagnetic induction, the current flows in a same direction in the wires at the four layers of the wound coil.

It may be understood that, a sequence of the layers of the wound coils shown in FIG. 8A is merely an example. In some other embodiments of this application, the sequence shown in FIG. 8A may alternatively be as follows: the fourth layer wound coil 84 disposed at the top layer, then the first layer wound coil 81, the second layer wound coil 82, and the third layer wound coil 83 from top to bottom.

Refer to FIG. 8B. This embodiment of this application is shown by using an example in which N=4 and four wires at four layers are series-parallel-wound to constitute a 2 -turn coil.

As shown in FIG. 8B, the winding method includes four layers of wound coils which are respectively a first layer wound coil 81, a second layer wound coil 82, a third layer wound coil 83, and a fourth layer wound coil 84 from top to bottom. The first layer wound coil 81 is wound by using a first wire 811, and the first wire 811 includes a first end 811a and a second end 811b. The second layer wound coil 82 is wound by using a second wire 821, and the second wire 821 includes a first end 821a and a second end 821b. The third layer wound coil 83 is wound by using a third wire 831, and the third wire 831 includes a first end 831a and a second end 831b. The fourth layer wound coil 84 is wound by using a fourth wire 841, and the fourth wire 841 includes a first end 841a and a second end 841b. The first end 811a of the first wire 811 is connected to the first end 821a of the second wire 821, the second end 811b of the first wire 811 is connected to the second end 821b of the second wire 821, the second end 821b of the second wire 821 is connected to the first end 831a of the third wire 831, the first end 831a of the third wire is connected to the first end 841a of the fourth wire 841, and the second end 831b of the third wire is connected to the second end 841b of the fourth wire 841. In other words, wires in each n layers of the N layers are connected in parallel, and wires between each n layers are connected in series, to be specific, inlets of the wires are connected, outlets are also connected, and then, an outlet of a wire at the lowest layer in n layers is connected to an inlet of a wire at the uppermost layer in the next n layers in series, where n is usually an even number.

It may be understood that, in the winding manner shown in FIG. 8B, it is not limited to that wires in a fixed quantity of layers (for example, two layers) are connected in parallel, and wires between each two layers are connected in series. Alternatively, wires in three upper layers may be connected in parallel, and then connected to a wire at the lowest layer in series. This is not limited in this embodiment of this application.

It can be learned that, when a 4-layer wound coil is to be designed, any one of the 4-layer 1-turn coil in the manner 1, the 4-layer 4-turn coil in the manner 2, and the 4-layer 3-turn coil in the manner 3 in the foregoing three manners, or any combination of a plurality of the coils may be used, to obtain a 4-layer B-turn coil. B may be an integer greater than or equal to 1, and B=k₁+k₂*4+k₁*3. k₁ is a quantity of coils wound in the manner 1 in the 4-layer wound coil, k₂ is a quantity of coils wound in the manner 2 in the 4-layer wound coil, and k₃ is a quantity of coils wound in the manner 3 in the 4-layer wound coil. Values of k₁, k₂, and k₂ are determined based on a plurality of factors such as a winding area, a diameter of a used wire, and winding performance of a to-be-designed coil. When the winding area is large, a thin wire is used, or the winding performance of the wire is good, the values of k₁, k₂, and k₂ are correspondingly large, and the quantity of turns A of the designed coil is large. The following provides examples of winding manners used when designing 4-layer coils with different quantity of turns.

For example, when B is 1, only the manner 1 may be used.

For another example, when B equals to 2, only the manner 2 may be used; or the manner 1 may be used twice, where to be specific, a 4-layer 1-turn coil is used as an inner loop, and is connected to a 4-layer 1-turn coil used as an outer loop in series, to constitute a 4-layer 2-turn coil.

For another example, when B equals to 3, only the manner 3 may be used; or the manner 1 may be used three times, where to be specific, a 4-layer 1-turn coil is used as the innermost loop, then is connected to a 4-layer 1-turn coil used as the intermediate loop in series, and finally, is connected to a 4-layer 1-turn coil used as the outermost loop in series, to constitute a 4-layer 3-turn coil.

For another example, when B equals to 4, only the manner 2 may be used; or the manner 1 and the manner 3 may be used in combination, where to be specific, a 4-layer 1-turn coil is used as the innermost/outermost loop, and is then connected to a 4-layer 3-turn coil used as the outer/inner loop in series, to constitute a 4-layer 4-turn coil; or the manner 1 may be used four times, where to be specific, a 4-layer 1-turn coil is used as the first loop, is connected to a 4-layer 1-turn coil used as the second loop in series, then is connected to a 4-layer 1-turn coil used as the third loop in series, and finally, is connected to a 4-layer 1-turn coil used as the fourth loop in series, to constitute a 4-layer 3-turn coil.

For another example, when B equals to 3, the manner 1 and the manner 2 may be used in combination, where to be specific, a 4-layer 1-turn coil is used as the innermost/outermost loop, and is then connected to a 4-layer 4-turn coil used as the outer/inner loop in series, to constitute a 4-layer 4-turn coil; or the manner 1 and the manner 3 may be used in combination, where to be specific, two 4-layer 1-turn coils are wound in the manner 1, and one 4-layer 1-turn coil is used as the innermost/outermost loop, is connected to a 4-layer 3-turn coil wound in the manner 2 and used as the intermediate loop in series, and finally, is connected to the other 4-layer 1-turn coil wound in the manner 1 and used as the outermost/innermost loop in series, to constitute a 4-layer 3-turn coil. In this way, when designing a 4-layer 5-turn coil, a plurality of combination manners can be used for implementation. Specifically, the combination manner may be determined based on a design requirement. For example, when a 4-layer 5-turn coil with a small area needs to be designed, the manner 1 and the manner 2 are used, because in this way, the coil can be wound by using only an inner loop and an outer loop, so that the area of the coil is reduced. For another example, when a coil with a strong flow capacity needs to be designed, the manner 1 and the manner 3 are used, because in this way, the innermost loop and the outermost loop can both be wound in the manner 1, and the intermediate loop is wound in the manner 3. Because a coil wound in the manner 1 has a strong flow capacity, when the coil is disposed at the innermost /outermost loop with a non-uniform magnetic field, the flow capacity of the coil can be improved, and electric energy loss can be reduced, so that charging efficiency is improved.

In conclusion, when a 4-layer wound coil is to be designed, any one or any combination of a plurality of the foregoing three manners may be used to implement the 4-layer B-turn coil, where B may be any integer greater than or equal to 1. Examples are not exhausted herein.

Based on the three manners applicable when winding a coil of an odd quantity of layers described in FIG. 3 to FIG. 5B and the manners applicable when winding a coil of an even quantity of layers described in FIG. 6 to FIG. 8B, it can be learned that:

Each time the manner 1 is used, a 1-turn coil can be implemented in a scenario in which N is an integer greater than or equal to 1. When the coil winding manner in the manner 1 is used, in other words, a coil is wound by using N layers of wires wound in parallel, regardless of a quantity of layers in the wound coil, head ends of wires at all layers are connected in parallel, and tail ends are also connected in parallel, to constitute an N-layer 1-turn coil, and this is equivalent to that N wires are wound in vertical space (namely, the thickness space of the coil described above).

Each time the manner 2 is used, an N-turn coil can be implemented in a scenario in which N is an integer greater than or equal to 1. When the coil winding manner in the manner 2 is used, in other words, a coil is wound by using N layers of wires wound in series, regardless of a quantity of layers in the wound coil, a head end of a wire at a layer is connected to a tail end of a wire at the next layer in series, to constitute an N-layer N-turn coil, and this is equivalent to that a single wire is wound in turns in vertical space (namely, the thickness space of the coil described above).

Each time the manner 3 is used, an M-turn coil can be implemented in a scenario in which N is an integer greater than or equal to 3, where M is less than N. When the coil winding manner in the manner 3 is used, in other words, a coil is wound by using N layers of wires in which some wires are wound in series and some wires are wound in parallel, regardless of a quantity of layers in the wound coil, an N-layer M-turn coil can be implemented, where M is less than N.

In general, any one or a plurality of the foregoing manner 1, manner 2, and manner 3 may be used to design a wound coil of any quantity of layers and any quantity of turns. The quantity of layers may be specifically determined based on thickness space left for the wound coil and a diameter of a used wire. For example, when thickness space of a to-be-designed coil is limited, or a thick wire needs to be used, the quantity of layers needs to be designed for the coil is small; on the contrary, when thickness space of the to-be-designed coil is adequate, or a thin wire is used, to fully use the thickness space, the quantity of layers needs to be designed for the coil may be large. The quantity of turns may be determined based on a winding width left for the wound coil, winding performance of a wire, and the like. For example, when a winding width of a to-be-designed coil is small, or winding performance of a used wire is poor, the quantity of turns of the coil is correspondingly small; or when the winding width of the to-be-designed coil is large, or the winding performance of the used wire is good, the quantity of turns of the coil is correspondingly large.

**The following describes an instance of the foregoing three manners by using a specific usage scenario.**

Design specifications of a wireless charging coil in a smartwatch is used as an example. It is assumed that specifications of a coil are required to be as follows: A coil inner diameter is 10 mm, a coil outer diameter is 14.5 mm, and a coil thickness is 0.45 mm. To fully use thickness space of the coil and winding area space, it is assumed that the thickness space and a winding width are fully used, and an optimal impedance and Q value are also obtained. In this case, a 3-layer 12-turn coil needs to be designed. Specifically, the 3-layer 12-turn coil may be designed by using the foregoing three coil winding manners. The following provides descriptions by using an example in which a 3-layer 3-turn winding manner is used twice, a 3-layer 2-turn winding manner is used once, and a 3-layer 1-turn winding manner is used four times to obtain the 3-layer 12-turn coil.

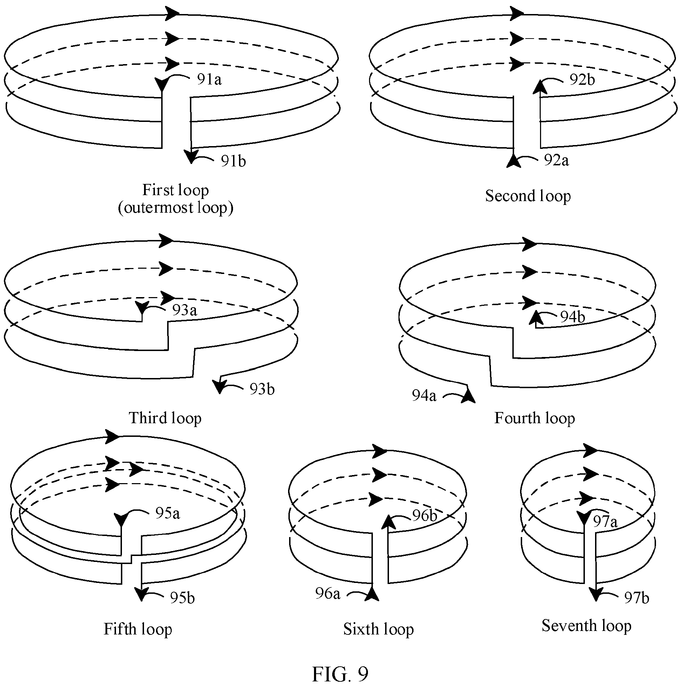

**FIG. 9** **shows an example of a schematic diagram of a structure of a 3-layer 12-turn coil.**

As shown in FIG. 9, the 3-layer 12-turn coil includes seven coils in total from the outer loop to the inner loop. The first loop (also referred to as the outermost loop) may use the foregoing manner 1, to be specific, is a 3-layer 1-turn coil wound by using three wires at three layers in parallel. 91a is an inlet of the first loop (also referred to as an input end), and 91b is an outlet of the first loop (also referred to as an output end). A winding direction, an inlet direction, and an outlet direction of the wire in the first loop are consistent with an arrow direction. Then, the outlet 91b of the first loop may be connected to an inlet 92a of the second loop, and the second loop may still use the foregoing manner 1, to be specific, is a 3-layer 1-turn coil wound by using three wires at three layers in parallel. 92a is the inlet of the second loop (also referred to as an input end), and 92b is an outlet of the second loop (also referred to as an output end). A winding direction, an inlet direction, and an outlet direction of the wire in the second loop are consistent with an arrow direction. Then, the outlet 92b of the second loop may be connected to an inlet 93a of the third loop, and the third loop may use the foregoing manner 2, to be specific, is a 3-layer 3-turn coil wound by using three wires at three layers in series. 93a is the inlet of the third loop (also referred to as an input end), and 93b is an outlet of the third loop (also referred to as an output end). A winding direction, an inlet direction, and an outlet direction of the wire in the third loop are consistent with an arrow direction. Then, the outlet 93b of the third loop may be connected to an inlet 94a of the fourth loop, and the fourth loop may still use the foregoing manner 2, to be specific, is a 3-layer 3-turn coil wound by using three wires at three layers in series. 94a is the inlet of the fifth loop (also referred to as an input end), and 94b is an outlet of the fourth loop (also referred to as an output end). A winding direction, an inlet direction, and an outlet direction of the wire in the fourth loop are consistent with an arrow direction. Then, the outlet 94b of the fourth loop may be connected to an inlet 95a of the fifth loop, and the fifth loop may use the foregoing manner 3, to be specific, is a 3-layer 2-turn coil wound by using four wires at three layers in which some wires are wound in series and some wires are wound in parallel. 95a is the inlet of the fifth loop (also referred to as an input end), and 95b is an outlet of the fifth loop (also referred to as an output end). A winding direction, an inlet direction, and an outlet direction of the wire in the fifth loop are consistent with an arrow direction. Then, the outlet 95b of the fifth loop may be connected to an inlet 96a of the sixth loop in series, and the sixth loop may use the foregoing manner 1, to be specific, is a 3-layer 1-turn coil wound by using three wires at three layers in parallel. 96a is the inlet of the sixth loop (also referred to as an input end), and 96b is an outlet of the sixth loop (also referred to as an output end). A winding direction, an inlet direction, and an outlet direction of the wire in the sixth loop are consistent with an arrow direction. Then, the outlet 96b of the sixth loop may be connected to an inlet 97a of the seventh loop (also referred to as the innermost loop), and the seventh loop may still use the foregoing manner 1, to be specific, is a 3-layer 1-turn coil wound by using three wires at three layers in parallel. 97a is the inlet of the seventh loop (also referred to as an input end), and 97b is an outlet of the seventh loop (also referred to as an output end). A winding direction, an inlet direction, and an outlet direction of the wire in the seventh loop are consistent with an arrow direction.

It may be understood that, in the 3-layer 12-turn coil including seven coils shown in FIG. 9, to clearly view an internal structure of the coil, the seven coils are drawn separately. However, in the actual 4-layer 12-turn coil, the seven coils are sequentially connected in series from the outer loop to the inner loop or from the inner loop to the outer loop, to constitute a closely arranged 4-layer 12-turn coil. Specifically, for example, when the first loop is in the outer loop, the second loop adjacent to the first loop is located inside the first loop, the third loop adjacent to the second loop is located inside the second loop, and so on. The first loop to the seventh loop are sequentially connected in series from the outer loop to the inner loop, and a winding diameter of a coil located inside is small. In addition, wires at a same layer in all loops of the seven coils are all arranged on a same plane, so that the seven coils constitute a 4-layer 12-turn coil with a small volume.

It can be learned that, in the 3-layer 12-turn coil shown in FIG. 9, two outermost layers and two innermost layers are wound in the manner 1 provided in this application, to be specific, are 3-layer 1-turn coils wound by using three wires at three layers in parallel; in three intermediate loops, two loops are wound in the manner 2 (to be specific, are two 3-layer 3-turn coils wound by using three wires at three layers in series), and one loop is wound in the manner 3 (to be specific, is a 3-layer 2-turn coil wound by using four wires at three layers); and an output end/input end in each loop is connected to an input end/output end in an adjacent loop in series, to finally constitute a 3-layer 12-turn coil.

In this embodiment of this application, when a 3-layer 12-turn coil needs to be designed, the 3-layer 12-turn coil may include K coils, and the K coils each include N layers of wires, where N is 3.

K is not limited in this application, and a value of K is determined based on a combination of the foregoing three winding manners. For example, when four 3-layer 3-turn coils wound in the manner 2 are combined into the 3-layer 12-turn coil, K=4; or when the combination manner shown in FIG. 9 is used, K=7.

The 3-layer 12-turn coil including the seven coils shown in FIG. 9 is used as an example. In the seven coils, an outlet of an i^{th} coil is connected in series to an inlet of an (i+1)^{th} coil, and the i^{th} coil is farther from a central axis than the (i+1)^{th} coil, where 1≤i≤K-1. In comparison between the i^{th} coil and the (i+1)^{th} coil, the i^{th} coil is the outer loop, and the (i+1)^{th} coil is the inner loop. When i=1, the i^{th} coil is the outermost loop (namely, the first loop in FIG. 9), and the (i+1)^{th} coil is the inner loop (namely, the second loop in FIG. 9) compared with the i^{th} coil; when i=6, the i^{th} coil is the outer loop (namely, the sixth loop in FIG. 9) compared with the (i+1)^{th} coil, and the (i+1)^{th} coil is the innermost loop (namely, the seventh loop in FIG. 9)

The 3-layer 12-turn coil including the seven coils shown in FIG. 9 is used as an example. In the seven coils, a wire at a j^{th} layer of the i^{th} coil is on a same plane as a wire at a j^{th} layer of the (i+1)^{th} coil, where N≥j≥1.

It may be understood that, the combination manner used for the foregoing 3-layer 12-turn coil is merely an example. The winding manner of the 3-layer 12-turn coil may further include other combinations, for example, the 3-layer 3-turn winding manner is used four times. This is not limited in this embodiment of this application. In addition, when a used combination manner is fixed, whether each loop uses the manner 1, the manner 2, or the manner 3 is not limited. However, the sequence shown in FIG. 9 not only is used to fully use thickness space and a winding width, but also needs to consider coil efficiency. Because the innermost loop and the outermost loop in a coil have the strongest magnetic fields and non-uniform current distribution, to improve flow capacities of inner and outer loops, the manner of winding three wires at three layers in parallel in an up-down direction in the manner 1 is used for the innermost loop and the outermost loop, to increase a surface area of the coil to improve the flow capacity, so that electric energy loss is reduced, and coil efficiency is improved.

The design specifications of the wireless charging coil in the smartwatch is still used as an example. It is assumed that specifications of a coil are required to be as follows: A coil inner diameter is 10 mm, a coil outer diameter is 14.5 mm, and a coil thickness is 0.45 mm. To fully use thickness space of the coil and winding area space, it is assumed that the thickness space and a winding width are fully used, and an optimal impedance value and Q value are also obtained. In this case, a 4-layer 18-turn coil needs to be designed. Specifically, the 4-layer 18-turn coil may be designed by using the foregoing three coil winding manners. The following provides descriptions by using an example in which a 4-layer 3-turn winding manner is used twice, a 4-layer 2-turn winding manner is used once, and a 4-layer 1-turn winding manner is used four times to obtain the 4-layer 18-turn coil.

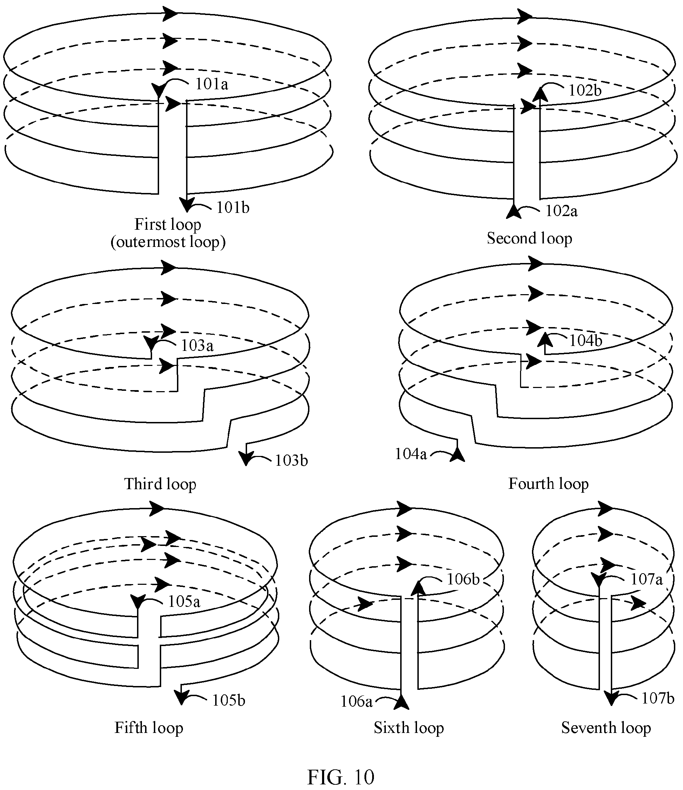

**FIG. 10** **shows an example of a schematic diagram of a structure of a 4-layer 18-turn coil.**

As shown in FIG. 10, the 4-layer 18-turn coil includes seven coils in total from the outer loop to the inner loop. The first loop (also referred to as the outermost loop) may use the foregoing manner 1, to be specific, is a 4-layer 1-turn coil wound by using four wires at four layers in parallel. 101a is an inlet of the first loop (also referred to as an input end), and 101b is an outlet of the first loop (also referred to as an output end). A winding direction, an inlet direction, and an outlet direction of the wire in the first loop are consistent with an arrow direction. Then, the outlet 101b of the first loop may be connected to an inlet 102a of the second loop, and the second loop may still use the foregoing manner 1, to be specific, is a 4-layer 1-turn coil wound by using four wires at four layers in parallel. 102a is the inlet of the second loop (also referred to as an input end), and 102b is an outlet of the second loop (also referred to as an output end). A winding direction, an inlet direction, and an outlet direction of the wire in the second loop are consistent with an arrow direction. Then, the outlet 102b of the second loop may be connected to an inlet 103a of the third loop, and the third loop may use the foregoing manner 2, to be specific, is a 4-layer 4-turn coil wound by using four wires at four layers in series. 103a is the inlet of the third loop (also referred to as an input end), and 103b is an outlet of the third loop (also referred to as an output end). A winding direction, an inlet direction, and an outlet direction of the wire in the third loop are consistent with an arrow direction. Then, the outlet 103b of the third loop may be connected to an inlet 104a of the fourth loop, and the fourth loop may still use the foregoing manner 2, to be specific, is a 4-layer 4-turn coil wound by using four wires at four layers in series. 104a is the inlet of the fifth loop (also referred to as an input end), and 104b is an outlet of the fourth loop (also referred to as an output end). A winding direction, an inlet direction, and an outlet direction of the wire in the fourth loop are consistent with an arrow direction. Then, the outlet 104b of the fourth loop may be connected to an inlet 105a of the fifth loop, and the fifth loop may use the foregoing manner 3, to be specific, is a 4-layer 3-turn coil wound by using five wires at four layers in which some wires are wound in series and some wires are wound in parallel. 105a is the inlet of the fifth loop (also referred to as an input end), and 105b is an outlet of the fifth loop (also referred to as an output end). A winding direction, an inlet direction, and an outlet direction of the wire in the fifth loop are consistent with an arrow direction. Then, the outlet 105b of the fifth loop may be connected to an inlet 106a of the sixth loop in series, and the sixth loop may use the foregoing manner 1, to be specific, is a 4-layer 1-turn coil wound by using four wires at four layers in parallel. 106a is the inlet of the sixth loop (also referred to as an input end), and 106b is an outlet of the sixth loop (also referred to as an output end). A winding direction, an inlet direction, and an outlet direction of the wire in the sixth loop are consistent with an arrow direction. Then, the outlet 106b of the sixth loop may be connected to an inlet 107a of the seventh loop (also referred to as the innermost loop), and the seventh loop may still use the foregoing manner 1, to be specific, is a 4-layer 1-turn coil wound by using four wires at four layers in parallel. 107a is the inlet of the seventh loop (also referred to as an input end), and 107b is an outlet of the seventh loop (also referred to as an output end). A winding direction, an inlet direction, and an outlet direction of the wire in the seventh loop are consistent with an arrow direction.

It may be understood that, in the 4-layer 18-turn coil shown in FIG. 10, to clearly view an internal structure of the coil, the seven coils are drawn separately. However, in the actual 4-layer 18-turn coil, the seven coils are sequentially connected in series from the outer loop to the inner loop or from the inner loop to the outer loop. Specifically, for example, when the first loop is in the outer loop, the second loop adjacent to the first loop is located inside the first loop. Similarly, the third loop is adjacent to the second loop, and the third loop is located inside the second loop, and so on. The first loop to the seventh loop are sequentially connected in series from the outer loop to the inner loop, and wires at a same layer in all loops of the seven coils are all arranged on a same plane.

It can be learned that, in the 4-layer 18-turn coil shown in FIG. 10, two outermost layers and two innermost layers are wound in the manner 1 provided in this application, to be specific, are 4-layer 1-turn coils wound by using four wires at four layers in parallel; in three intermediate loops, two loops are wound in the manner 2 (to be specific, are two 4-layer 4-turn coils wound by using four wires at four layers in series), and one loop is wound in the manner 3 (to be specific, is a 4-layer 3-turn coil wound by using five wires at four layers); and an output end/input end in each loop is connected to an input end/output end in an adjacent loop in series, to finally constitute a 4-layer 18-turn coil.

It may be understood that, the combination manner used for the foregoing 4-layer 18-turn coil is merely an example. The winding manner of the 4-layer 18-turn coil may further include other combinations, for example, the 4-layer 4-turn winding manner is used four times and the 4-layer 1-turn winding manner is used twice. This is not limited in this embodiment of this application. In addition, when a used combination manner is fixed, whether each loop uses the manner 1, the manner 2, or the manner 3 is not limited. However, the sequence shown in FIG. 10 not only is used to fully use thickness space and a winding width, but also needs to consider wire and coil efficiency. Because the innermost loop and the outermost loop in a coil have the strongest magnetic fields and non-uniform current distribution, to improve flow capacities of inner and outer loops, the manner of winding four wires at four layers in parallel in an up-down direction in the manner 1 is used for the innermost loop and the outermost loop, to increase a surface area of the coil to improve the flow capacity, so that electric energy loss is reduced, and coil efficiency is improved.

Based on the design manner of a coil of an odd quantity of layers (for example, three layers) described in FIG. 9 and the design manner of a coil of an even quantity of layers (for example, four layers) described in FIG. 10, it can be learned that, any one of a plurality of the three winding manners provided in this application can be used to implement a coil of an odd quantity of layers and any quantity of turns or a coil of an even quantity of layers and any quantity of turns. A specific combination manner of the three winding manners may be determined based on a quantity of layers and a quantity of turns to be designed. Specifically, when a coil of an odd quantity of layers is designed, a 1-turn coil may be wound in the manner 1, a coil of an odd quantity of turns may be wound in the manner 2, and a coil of an even quantity of turns may be wound in the manner 3. Therefore, in a coil of an odd quantity of layers, if a size of the coil is not limited, a coil of an odd quantity of turns or an even quantity of turns can be implemented by combining the manners 1, 2, and 3. Alternatively, when a coil of an even quantity of layers is designed, a 1-turn coil may be wound in the manner 1, a coil of an even quantity of turns may be wound in the manner 2, and a coil of an even quantity or an odd quantity of turns may be wound in the manner 3. Therefore, in a coil of an odd quantity of layers, if a size of the coil is not limited, a coil of an odd quantity of turns or an even quantity of turns can be implemented by combining the manners 1, 2, and 3.

In conclusion, when a thickness and a winding area of a to-be-designed coil is not limited, any one or a plurality of the foregoing three winding manners provided in this application can be used to implement a coil of any quantity of layers and any quantity of turns, so that the designed coil can be suitable for more application scenarios with different requirements.

It can be learned from FIG. 9 and FIG. 10 that, in this application, any one or a plurality of wound coils using the foregoing three winding manners may be used in combination to implement a coil of any quantity of layers and any quantity of turns. However, FIG. 9 and FIG. 10 only show examples of a combination manner in which a multi-layer coil is wound by wiring in a vertical direction, then another multi-layer coil is wound by wiring in the vertical direction, and finally a plurality of multi-layer coils are sequentially connected in series from an outer loop to an inner loop or from the inner loop to the outer loop in a horizontal direction. In addition to the manner of first vertical wiring and then horizontal wiring, an embodiment of this application further provides another combination manner, where to be specific, same layers of a plurality of coils are connected by wiring in the horizontal direction, and then layers of each coil are connected by wiring in the vertical direction. Details are as follows:

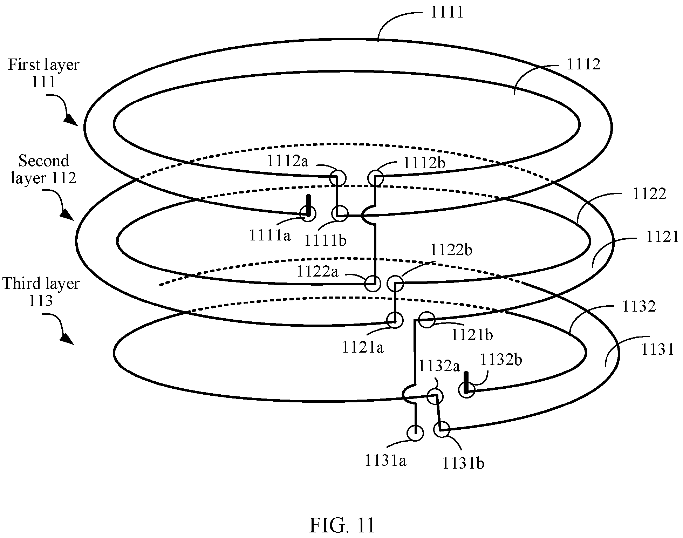

FIG. 11 shows an example of a 3-layer 6-turn coil obtained through combination of two coils with three layers of wires wound in series.

As shown in FIG. 11, the 3-layer 6-turn coil includes two coils in an in-out direction. Each coil includes three layers of wires, to be specific, a first layer 111, a second layer 112, and a third layer 113. Wires at a same layer in both coils are arranged on a same horizontal plane. A specific connection relationship between the two coils is as follows:

A wire at the first layer in a first coil includes a wire 1111, where an inlet of the wire 1111 is 1111a, and an outlet is 1111b; a wire at the first layer in a second coil includes a wire 1112, where an inlet of the wire 1112 is 1112a, and an outlet is 1112b; a wire at the second layer in the first coil includes a wire 1121, where an inlet of the wire 1121 is 1121a, and an outlet is 1121b; a wire at the second layer in the second coil includes a wire 1122, where an inlet of the wire 1122 is 1122a, and an outlet is 1122b; a wire at the third layer in the first coil includes a wire 1131, where an inlet of the wire 1131 is 1131a, and an outlet is 1131b; and a wire at the third layer in the second coil includes a wire 1132, where an inlet of the wire 1132 is 1132a, and an outlet is 1132b. The outlet 1111b of the wire 1111 is connected to the inlet 1112a of the wire 1112; the outlet 1112b of the wire 1112 is connected to the inlet 1122a of the wire 1122; the outlet 1122b of the wire 1122 is connected to the inlet 1121a of the wire 1121; the outlet 1121b of the wire 1121 is connected to the inlet 1131a of the wire 1131; and the outlet 1131b of the wire 1131 is connected to the inlet 1132a of the wire 1132. In other words, in two three layers of wires, an outlet of a wire at an x^{th} layer of the first three layers of wires is connected to an inlet of a wire at an x^{th} layer of the second three layers of wires, an outlet of the wire at the x^{th} layer of the second three layers of wires is connected to an inlet of a wire at an (x+1)^{th} layer of the second three layers of wires, and an outlet of the wire at the (x+1)^{th} layer of the second three layers of wires is connected to an inlet of a wire at an (x+1)^{th} layer of the first three layers of wires, where 1≤x≤N-1.

FIG. 12 shows an inventive example of a 3-layer 4-turn coil obtained through combination of two coils whose three layers of wires are series-parallel-wound.

As shown in FIG. 12, the 3-layer 4-turn coil includes two coils in an in-out direction, and each coil includes three layers of wires. To facilitate illustration of a connection relationship between wires at all layers, FIG. 12 illustrates the 3-layer 4-turn coil at three layers, to be specific, a first layer 121, a second layer 122, and a third layer 123. Wires at a same layer in both coils are arranged on a same horizontal plane. A specific connection relationship between the two coils is as follows:

A wire at the first layer in a first coil includes a wire 1211, where an inlet of the wire 1211 is 1211a, and an outlet is 1211b; a wire at the first layer in a second coil includes a wire 1212, where an inlet of the wire 1212 is 1212a, and outlets are 1212b and 1212b' (1212b and 1212b' may be a same connection point or two adjacent connection points in physical connection); wires at the second layer in the first coil include wires 1221A and 1221B, where an inlet of the wire 1221A is 1121Aa, an outlet is 1221Ab, an inlet of the wire 1121B is 1121Ba, and an outlet is 1221Bb; wires at the second layer in the second coil include wires 1222A and 1222B, where an inlet of the wire 1222A is 1122Aa, an outlet is 1222Ab, inlets of the wire 1122B are 1122Ba and 1122Ba' (1122Ba and 1122Ba' may be a same connection point or two adjacent connection points in physical connection), and outlets are 1222Bb and 1222Bb' (1222Bb and 1222Bb' may be a same connection point or two adjacent connection points in physical connection); a wire at the third layer in the first coil includes a wire 1231, where inlets of the wire 1231 are 1231a and 1231a', and an outlet is 1231b; and a wire at the third layer in the second coil includes a wire 1232, where an inlet of the wire 1232 is 1232a, and an outlet is 1232b. The outlet 1211b of the wire 1211 is connected to the inlet 1212a of the wire 1212; the inlet 1211a of the wire 1211 is connected to the inlet 1221Aa of the wire 1221A; the outlet 1211b of the wire 1211 is connected to the outlet 1221Ab of the wire 1221A; the inlet 1212a of the wire 1212 is connected to the inlet 1222Aa of the wire 1222A; the outlet 1212b of the wire 1212 is connected to the outlet 1222Ab of the wire 1222A; the outlet 1212b' of the wire 1212 is connected to the inlet 1222Ba' of the wire 1222B; the inlet 1222Ba of the wire 1222B is connected to the inlet 1232a of the wire 1232; the outlet 1222Bb of the wire 1222B is connected to the outlet 1232b of the wire 1232; the outlet 1222Bb' of the wire 1222 is connected to the inlet 1231a' of the wire 1231; the inlet 1221Ba of the wire 1221 is connected to the inlet 1231a of the wire 1231; and the outlet 1221Bb of the wire 1221 is connected to the outlet 1231b of the wire 1231. In other words, in the two three layers of wires, the second layer in the first three layers of wires includes at least a first wire 1221A and a second wire 1221B, and the second layer in the second three layers of wires includes at least a third wire 1222A and a fourth wire 1222B. An outlet of a wire at the first layer of the first three layers of wires is connected to an inlet of a wire at the first layer of the second three layers of wires, an inlet of the wire at the first layer of the first three layers of wires is connected to an inlet of the first wire at the second layer of the first three layers of wires, the outlet of the wire at the first layer of the first three layers of wires is connected to an outlet of the first wire at the second layer of the first three layers of wires, the inlet of the wire at the first layer of the second three layers of wires is further connected to an inlet of the third wire at the second layer of the second three layers of wires, an outlet of the wire at the first layer of the second three layers of wires is connected to an outlet of the third wire at the second layer of the second three layers of wires, the outlet of the wire at the first layer of the second three layers of wires is further connected to an inlet of the fourth wire at the second layer of the second three layers of wires, an inlet of the second wire at the second layer of the first three layers of wires is connected to an inlet of a wire at the third layer of the first N layers of wires, an outlet of the second wire at the third layer of the first three layers of wires is connected to an outlet of the wire at the third layer of the first three layers of wires, the inlet of the fourth wire at the second layer of the second three layers of wires is connected to an inlet of a wire at the third layer of the second three layers of wires, an outlet of the fourth wire at the second layer of the second three layers of wires is connected to an outlet of the wire at the third layer of the second three layers of wires, the outlet of the fourth wire at the second layer of the second three layers of wires is further connected to the inlet of the wire at the third layer of the first three layers of wires, and the outlet of the wire at the third layer of the second three layers of wires is connected to the inlet of the wire at the third layer of the first three layers of wires.

In conclusion, by implementing the wireless charging coil winding method provided in this application, based on specifications (for example, a coil thickness and a coil winding width) of a coil to be designed, a wound coil of any quantity of layers and any quantity of turns can be implemented by using any one or more of the following three winding manners: an N-layer 1-turn coil whose N layers of wires are wound in parallel, an N-layer N-turn coil whose N layers of wires are wound in series, and an N-layer M-turn coil (N>M) whose N layers of wires are series-parallel-wound. In a case in which a size of the coil is limited, when using a multi-layer multi-turn wound coil designed in the method provided in this application, limited coil thickness space, a limited coil winding width, and the like can be fully used, to obtain an optimal impedance and Q value, and reduce coil loss, so that electrical energy transmission efficiency between wireless charging systems is improved, and charging efficiency of the electronic device is improved. In addition, coil heating is reduced, product security is considered, and user experience on wireless charging is improved in all aspects. Moreover, the multi-layer wound coil provided in this application may be designed based on the circuit board. A coil designed based on the circuit board is flat, and usually only needs an adhesive layer of 10 to 30 µm to implement adhesion between the winding wire and the flexible magnetic material, which facilitates reducing a body thickness by a device using the coil. In addition, a shape of the coil designed based on the circuit board can be manufactured into an irregular shape based on an actual requirement, and a limitation in which an existing wound coil can only be designed to a circular or rectangular coil is lifted.

The following describes in detail an electronic device 100 to which the wireless charging coil winding method provided in this application is applied. The electronic device 100 may be a device mounted with iOS, Android, Microsoft, or another operating system. This is not limited in this embodiment of this application.

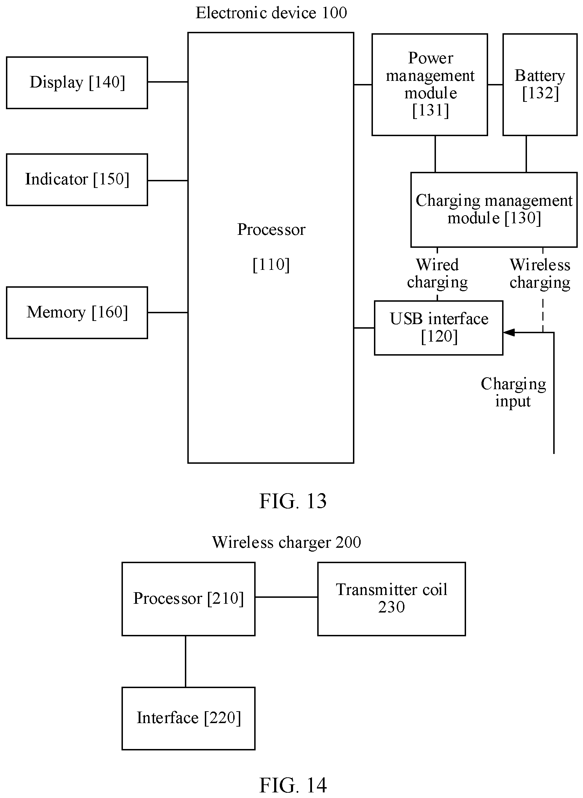

FIG. 13 is a schematic diagram of a hardware structure of the electronic device 100.

As shown in FIG. 13, the electronic device 100 may include a processor 110, a universal serial bus (universal serial bus, USB) interface 120, a charging management module 130, a power management module 131, a battery 132, a display 140, an indicator 150, a memory 160, and the like.

It may be understood that an example structure in this embodiment of this application does not constitute a specific limitation on the electronic device 100. In some other embodiments of this application, the electronic device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors. The controller may be a nerve center and a command center of the electronic device 100. The controller may generate an operation control signal according to instruction operation code and a time-sequence signal, and control fetching and execution of instructions.

A memory may further be disposed in the processor 110, configured to store instructions and data. In some embodiments, the memory in processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

In this embodiment of this application, the processor 110 may invoke a charging input received by the charging management module 130 from a charger. The charger may be the wireless charger 200 provided in this application.

In some embodiments, the processor 110 may include one or more interfaces. The interface may include the universal serial bus (universal serial bus, USB) interface 120 and the like.

The USB interface 120 is an interface that conforms to a USB standard specification, and may be specifically a mini USB interface, a micro USB interface, a USB Type C interface, or the like. The USB interface 120 may be configured to connect to the charger to charge the electronic device 100, or may be used for data transmission between the electronic device 100 and a peripheral device. The USB interface 120 may also be configured to connect to a headset to play audio through the headset. The interface may also be configured to be connected to another electronic device such as an AR device.

It may be understood that an interface connection relationship between the modules that is shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 130 is configured to receive a charging input from a charger. The charger may be the wireless charger 200 or may be a wired charger. In some embodiments of wired charging, the charging management module 130 may receive a charging input of the wired charger through the USB interface 120. In some embodiments of wireless charging, the charging management module 130 may receive a wireless charging input by using a wireless charging coil of the electronic device 100. While the charging management module 130 charges the battery 132, the power management module 131 may also supply power to the electronic device. The wireless charging coil is specifically wired and wound in the winding method provided above.

The power management module 131 is configured to connect to the battery 132, the charging management module 130, and the processor 110. The power management module 131 receives an input from the battery 132 and/or the charging management module 130, and supplies power to the processor 110, the display 140, the indicator 150, the memory 160, and the like. The power management module 131 may also be configured to monitor parameters such as a battery capacity, a quantity of battery cycles, and a battery health status (power leakage and impedance). In some other embodiments, the power management module 131 may alternatively be disposed in the processor 110. In some other embodiments, the power management module 131 and the charging management module 130 may alternatively be disposed in a same device.

The electronic device 100 implements a display function through the GPU, the display 140, the application processor, and the like. The GPU is a microprocessor for image processing and connects the display 140 and the application processor. The GPU is configured to perform mathematical and geometric calculations, and is configured to render graphics. The processor 110 may include one or more GPUs that execute program instructions to generate or change display information.

The display 140 is configured to display an image, a video, and the like. The display 140 includes a display panel. A liquid crystal display (liquid crystal display, LCD) may be used as the display panel. The display panel may alternatively be manufactured by using an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini LED, a micro LED, a micro-OLED, a quantum dot light emitting diode (quantum dot light emitting diode, QLED), or the like. In some embodiments, the electronic device 100 may include 1 or N displays 140, where N is a positive integer greater than 1.

In this application of this application, the display 140 may be configured to notify a user of wireless charging in progress, battery power, and the like.

The indicator 150 may be an indicator light, and may be configured to indicate a charging state or a battery change, or may be further configured to indicate a message, a missed call, a notification, and the like.

In this application of this application, the indicator 150 may further be configured to notify the user of wireless charging in progress, charging completed, and the like.

The memory 160 may include one or more random access memories (random access memory, RAM) and one or more non-volatile memories (non-volatile memory, NVM).

The random access memories may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as DDR5 SDRAM), and the like.

The non-volatile memories may include a magnetic disk storage device and a flash memory (flash memory).

According to division of an operating principle, the flash memory may include NOR FLASH, NAND FLASH, 3D NAND FLASH, and the like. According to division of a potential order of storage cells, the flash memory may include a single-level cell (single-level cell, SLC), a multi-level cell (multi-level cell, MLC), a triple-level cell (triple-level cell, TLC), a quad-level cell (quad-level cell, QLC), and the like. According to division of a storage specification, the flash memory may include universal flash storage (English: universal flash storage, UFS), an embedded multi media card (embedded multi media Card, eMMC), and the like.

The random access memory may be directly read and written by the processor 110, may be configured to store an executable program (for example, machine instructions) of an operating system or another running program, or may be configured to store data of a user and an application.

The non-volatile memory may also store the executable program, the data of the user and the application, and the like, and may be loaded into the random access memory in advance for the processor 110 to perform direct reading and writing.

The following describes in detail a wireless charger 200 to which the wireless charging coil winding method provided in this application is applied.

FIG. 14 shows a schematic diagram of a hardware structure of the wireless charger 200.

As shown in FIG. 14, the wireless charger 200 may include a processor 210, a universal serial bus (universal serial bus, USB) interface 220, a transmitter coil 230, and the like.

It may be understood that the structure illustrated in this embodiment of this application does not constitute a specific limitation on the wireless charger 200. In some other embodiments of this application, the wireless charger 200 may include more or fewer components than those shown in the figure, or some components may be combined, or some components may be divided, or different component arrangements may be used. The components shown in the figure may be implemented by hardware, software, or a combination of software and hardware.

The processor 210 may include one or more wireless charging chips, and is used as a nerve center and a command center of the wireless charger 200. The processor 210 may generate an operation control signal according to instruction operation code and a time-sequence signal, and control fetching and execution of instructions.

In this embodiment of this application, the processor 210 may supply an alternating current to the transmitter coil, so that the transmitter coil generates an alternating magnetic field.

In some embodiments, the processor 210 may include one or more interfaces. The interface may include the universal serial bus (universal serial bus, USB) interface 220 and the like.

The USB interface 220 is an interface that conforms to a USB standard specification, and may be specifically a mini USB interface, a micro USB interface, a USB Type C interface, or the like. The USB interface 220 may be configured to connect to the charger to charge the wireless charger 200, or may be used for data transmission between the wireless charger 200 and a peripheral device. The USB interface 220 may also be configured to connect to a headset to play audio through the headset. The interface may also be configured to be connected to another electronic device such as an AR device.

In this embodiment of this application, the transmitter coil 230 may be configured to generate an alternating magnetic field, so that a receiver coil in an electronic device 100 close to the wireless charger 200 generates an induced voltage, to implement wireless charging.

It may be understood that an interface connection relationship between the modules illustrated in this embodiment of this application is merely an example for description, and does not constitute a limitation on the structure of the wireless charger 200. In some other embodiments of this application, the wireless charger 200 may alternatively use an interface connection manner different from that in the foregoing embodiment, or use a combination of a plurality of interface connection manners.

It should be understood that the steps of the foregoing method embodiment provided in this application may be implemented by using a hardware integrated logic circuit in the processor or implemented by using instructions in a software form. The steps of the method disclosed with reference to embodiments of this application may be directly implemented by a hardware processor, or may be implemented by a combination of hardware and software modules in a processor.

This application further provides an electronic device, and the electronic device may include a memory and a processor. The memory may be configured to store a computer program, and the processor may be configured to invoke the computer program in the memory to cause the electronic device to perform the method in any one of the foregoing embodiments.

This application further provides a chip system. The chip system includes at least one processor configured to implement the functions involved in the method performed by the electronic device in any one of the foregoing embodiments.

In a possible design, the chip system further includes a memory. The memory is configured to store program instructions and data. The memory is located inside the processor or outside the processor.

The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in this embodiment of this application. For example, the memory may be a non-transitory memory such as a read only memory (ROM), and the memory and the processor may be integrated on a same chip, or may be arranged on different chips respectively. A type of the memory and an arrangement manner of the memory and the processor are not limited in embodiments of this application.

For example, the chip system may be a field programmable gate array (field programmable gate array, FPGA), an application-specific integrated circuit (application-specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product, and the computer program product includes a computer program (which may also be referred to as code or an instruction). When the computer program is run, a computer is caused to perform the method performed by the electronic device in any one of the foregoing embodiments.

This application further provides a computer-readable storage medium. The computer-readable storage medium stores a computer program (also referred to as code or an instruction). When the computer program is run, a computer is caused to perform the method performed by the electronic device in any one of the foregoing embodiments.

In conclusion, this application further provides a wireless charging method. The method is applied to a wireless charging system including the electronic device 100 and the wireless charger 200. A transmitter coil is disposed in the wireless charger 200. The wireless charger 200 provides the transmitter coil with an alternating current with specific frequency, so that the transmitter coil generates an alternating magnetic field. Then the electronic device 100 approaches the wireless charger, a receiver coil in the electronic device 100 may generate an induced voltage in the magnetic field generated by the transmitter coil, to charge the electronic device 100. The receiver coil at the electronic device 100 end may be specifically designed by using the winding method described above. Various implementations of this application may be combined randomly to achieve different technical effects.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk)), or the like.

A person of ordinary skill in the art may understand that all or some of the procedures in the methods in the embodiments may be implemented by using a computer program instructing relevant hardware. The program may be stored in a computer-readable storage medium. When the program is executed, the procedures in the foregoing method embodiments may be performed. The foregoing storage medium includes any medium that can store program code, such as a ROM, a random access memory (RAM), a magnetic disk, or an optical disc.

In conclusion, the descriptions above are merely embodiments of the technical solutions of the present invention, but are not intended to limit the protection scope of the present invention. Rather, the present invention is defined by the appended set of claims.

## Claims

1. A wireless charging coil, wherein the wireless charging coil comprises K coils, an i^{th} coil has a larger winding diameter than an (i+1)^{th} coil, and the (i+1)^{th} coil is located inside the i^{th} coil, wherein 1≤i≤K-1; and
each of the K coils respectively comprises N layers of wires (121, 122, 123), and a wire at a j^{th} layer of the i^{th} coil is on a same plane as a wire at a j^{th} layer of the (i+1)^{th} coil, wherein N≥j≥1,
**characterized in that**
the K coils comprise at least two coils whose N layers of wires are series-parallel-wound and that are sequentially connected from an inner loop to an outer loop or from the outer loop to the inner loop, wherein a first coil of the at least two coils whose N layers of wires are series-parallel-wound comprises a first N layers of wires and a second coil of the at least two coils whose N layers of wires are series-parallel-wound comprises a second N layers of wires, a y^{th} layer (122) of the first N layers of wires comprises at least a first wire (1221A) and a second wire (1221B), and a y^{th} layer (122) of the second N layers of wires comprises at least a third wire (1222A) and a fourth wire (1222B);
and an outlet (1211b) of a wire (1211) at a (y-1)^{th} layer (121) of the first N layers of wires is connected to an inlet (1212a) of a wire (1212) at a (y-1)^{th} layer (121) of the second N layers of wires, an inlet (1211a) of the wire (1211) at the (y-1)^{th} layer (121) of the first N layers of wires is connected to an inlet (1221Aa) of the first wire (1221A) at the y^{th} layer (122) of the first N layers of wires, the outlet (1211b) of the wire (1211) j at the (y-1)^{th} layer (121) of the first N layers of wires is connected to an outlet (1211Ab) of the first wire (1211A) at the y^{th} layer (122) of the first N layers of wires, the inlet (1212a) of the wire (1212) at the (y-1)^{th} layer (121) of the second N layers of wires is further connected to an inlet (1222Aa) of the third wire (1222A) at the y^{th} layer (122) of the second N layers of wires, an outlet (1212b) of the wire (1212) at the (y-1)^{th} layer (121) of the second N layers of wires is connected to an outlet (1222Ab) of the third wire (1222A) at the y^{th} (122) of the second N layers of wires, the outlet (1212b') of the wire (1212) at the (y-1)^{th} layer (121) of the second N layers of wires is further connected to an inlet (1222Ba') of the fourth wire (1222B) at the y^{th} layer (122) of the second N layers of wires, an inlet (1221Ba) of the second wire (1221B) at the y^{th} layer (122) of the first N layers of wires is connected to an inlet (1231a) of a wire (1231) at a (y+1)^{th} layer (123) of the first N layers of wires, an outlet (1221Bb) of the second wire (1221B) at the y^{th} layer (122) of the first N layers of wires is connected to an outlet (1231b) of the wire (1231) at the (y+1)^{th} layer (123) of the first N layers of wires, the inlet (1222Ba) of the fourth wire (1222B) at the y^{th} layer (122) of the second N layers of wires is connected to an inlet (1232a) of a wire (1232) at a (y+1)^{th} layer (123) of the second N layers of wires, an outlet (1222Bb) of the fourth wire (1222B) at the y^{th} layer (122) of the second N layers of wires is connected to an outlet (1232b) of the wire (1232) at the (y+1)^{th} layer (123) of the second N layers of wires, the outlet (1222Bb') of the fourth wire (1222B) at the y^{th} layer (122) of the second N layers of wires is further connected to the inlet (1231a') of the wire (1231) at the (y+1)^{th} layer (123) of the first N layers of wires, and the outlet of the wire (1232) at the (y+1)^{th} layer (123) of the second N layers of wires is connected to the inlet of the wire (1231) at the (y+1)^{th} layer (123) of the first N layers of wires, wherein N>y>1.

2. The wireless charging coil according to claim 1, wherein remaining coils of the K coils comprise any one or more of the following coils: a coil whose N layers of wires are wound in parallel, a coil whose N layers of wires are wound in series, and a coil whose N layers of wires are series-parallel-wound.

3. The wireless charging coil according to claim 2, wherein the remaining coils comprise the coil whose N layers of wires are wound in parallel, wherein in the coil whose N layers of wires are wound in parallel, inlets of wires at all layers are connected, and outlets of wires at all layers are connected.

4. The wireless charging coil according to claim 2 or 3, wherein the remaining coils comprise the coil whose N layers of wires are wound in series, wherein the coil whose N layers of wires are wound in series comprises: in the N layers of wires, an outlet of a wire at an x^{th} layer is connected to an inlet of a wire at an (x+1)^{th} layer, wherein 1≤x≤N-1.

5. The wireless charging coil according to claim 2 or 3, wherein the remaining coils comprise at least two coils whose N layers of wires are wound in series and that are sequentially connected from an inner loop to an outer loop or from the outer loop to the inner loop, wherein a first coil of the at least two coils whose N layers of wires are wound in series comprises a first N layers of wires and a second coil of the at least two coils whose N layers of wires are wound in series comprises a second N layers of wires, an outlet of a wire at an x^{th} layer of the first N layers of wires is connected to an inlet of a wire at an x^{th} layer of the second N layers of wires, an outlet of the wire at the x^{th} layer of the second N layers of wires is connected to an inlet of a wire at an (x+1)^{th} layer of the second N layers of wires, and an outlet of the wire at the (x+1)^{th} layer of the second N layers of wires is connected to an inlet of a wire at an (x+1)^{th} layer of the first N layers of wires, wherein 1≤x≤N-1.

6. The wireless charging coil according to any one of claims 1 to 5, wherein a shape of the K coils comprises: a circle, an ellipse, a racetrack, a rectangle, or a triangle.

7. The wireless charging coil according one of claims 1 to 6, wherein each layer of the N layers of wires comprises one wire or a plurality of wires.

8. The wireless charging coil according to any one of claims 1 to 7, wherein an insulation layer is disposed between two adjacent layers of the N layers of wires.

9. An electronic device (100), wherein the electronic device comprises the wireless charging coil according to any one of claims 1 to 8.

10. A communication system (10), comprising a charging device (200) and a terminal (100), wherein the charging device comprises the wireless charging coil (230) according to any one of claims 1 to 8, the terminal comprises the wireless charging coil according to any one of claims 1 to 8, and the wireless charging coil of the charging device is configured to send a signal to the wireless charging coil of the terminal.

## Patentansprüche

1. Drahtlose Ladespule, wobei die drahtlose Ladespule K Spulen umfasst, eine i^{te} Spule einen größeren Wicklungsdurchmesser als eine (i+1)^{te} Spule aufweist und die (i+1)^{te} Spule innerhalb der i^{ten} Spule angeordnet ist, wobei 1≤i≤K-1; und
wobei jede der K Spulen jeweils N Drahtlagen (121, 122, 123) umfasst und ein Draht in einer j^{ten} Lage der i^{ten} Spule auf derselben Ebene liegt wie ein Draht in einer j^{ten} Lage der (i+1)^{ten} Spule, wobei N≥j≥1,
**dadurch gekennzeichnet, dass**
die K Spulen mindestens zwei Spulen umfassen, deren N Drahtlagen seriell-parallel gewickelt sind und die nacheinander von einer inneren Schleife zu einer äußeren Schleife oder von der äußeren Schleife zu der inneren Schleife verbunden sind, wobei eine erste Spule der mindestens zwei Spulen, deren N Drahtlagen seriell-parallel gewickelt sind, eine erste Gruppe von N Drahtlagen umfasst und eine zweite Spule der mindestens zwei Spulen, deren N Drahtlagen seriell-parallel gewickelt sind, eine zweite Gruppe von N Drahtlagen umfasst, eine y^{te} Lage (122) der ersten Gruppe von N Drahtlagen mindestens einen ersten Draht (1221A) und einen zweiten Draht (1221B) umfasst und eine y^{te} Lage (122) der zweiten Gruppe von N Drahtlagen mindestens einen dritten Draht (1221A) und einen vierten Draht (1221B) umfasst; und
ein Ausgang (1211b) eines Drahtes (1211) an einer (y-1)^{ten} Schicht (121) der ersten N Drahtschichten ist mit einem Eingang (1212a) eines Drahtes (1212) an einer (y-1)^{ten} Schicht (121) der zweiten N Drahtschichten verbunden, ein Eingang (1211a) des Drahtes (1211) an der (y-1)^{ten} Schicht (121) der ersten N Drahtschichten ist mit einem Eingang (1221Aa) des ersten Drahtes (1221A) an der y^{ten} Schicht (122) der ersten N Drahtschichten verbunden, der Ausgang (1211b) des Drahtes (1211) an der (y-1)^{ten} Schicht (121) der ersten N Drahtschichten ist mit einem Ausgang (1211Ab) des ersten Drahtes (1211A) an der y^{ten} Schicht (122) der ersten N Drahtschichten verbunden, der Eingang (1212a) des Drahtes (1212) an der (y-1)^{ten} Schicht (121) der zweiten N Drahtschichten ist ferner mit einem Eingang (1222Aa) des dritten Drahtes (1222A) an der y^{ten} Schicht (122) der zweiten N Drahtschichten verbunden, ein Ausgang (1212b) des Drahtes (1212) an der (y-1)^{ten} Schicht (121) der zweiten N Drahtschichten ist mit einem Ausgang (1222Ab) des dritten Drahtes (1222A) an der y^{ten} Schicht (122) der zweiten N Drahtschichten verbunden, der Ausgang (1212b') des Drahtes (1212) an der (y-1)^{ten} Schicht (121) der zweiten N Drahtschichten ist ferner mit einem Eingang (1222Ba') des vierten Drahtes (1222B) an der y^{ten} Schicht (122) der zweiten N Drahtschichten verbunden, ein Eingang (1222Ba) des zweiten Drahtes (1221B) an der y^{ten} Schicht (122) der ersten N Drahtschichten ist mit einem Eingang (1231a) eines Drahtes (1231) an einer (y+1)^{ten} Schicht (123) der ersten N Drahtschichten verbunden, ein Ausgang (1221Bb) des zweiten Drahtes (1221B) an der y^{ten} Schicht (122) der ersten N Drahtschichten ist mit einem Ausgang (1231b) des Drahtes (1231) an der (y+1)^{ten} Schicht (123) der ersten N Drahtschichten verbunden, der Eingang (1222Ba) des vierten Drahtes (1222B) an der y^{ten} Schicht (122) der zweiten N Drahtschichten ist mit einem Eingang (1232a) eines Drahtes (1232) an einer (y+1)^{ten} Schicht (123) der zweiten N Drahtschichten verbunden, ein Ausgang (1222Bb) des vierten Drahtes (1222B) an der y^{ten} Schicht (122) der zweiten N Drahtschichten ist mit einem Ausgang (1232b) des Drahtes (1232) an der (y+1)^{ten} Schicht (123) der zweiten N Drahtschichten verbunden, der Ausgang (1222Bb') des vierten Drahtes (1222B) an der y^{ten} Schicht (122) der zweiten N Drahtschichten ist ferner mit dem Eingang (1231a') des Drahtes (1231) an der (y+1)^{ten} Schicht (123) der ersten N Drahtschichten verbunden, und der Ausgang des Drahtes (1232) an der (y+1)^{ten} Schicht (123) der zweiten N Drahtschichten ist mit dem Eingang des Drahtes (1231) an der (y+1)^{ten} Schicht (123) der ersten N Drahtschichten verbunden, wobei N>y>1.

2. Drahtlose Ladespule nach Anspruch 1, wobei die verbleibenden Spulen der K Spulen eine oder mehrere der folgenden Spulen umfassen: eine Spule, deren N Drahtschichten parallel gewickelt sind, eine Spule, deren N Drahtschichten in Reihe gewickelt sind, und eine Spule, deren N Drahtschichten in Reihen-Parallel-Schaltung gewickelt sind.

3. Drahtlose Ladespule nach Anspruch 2, wobei die verbleibenden Spulen die Spule umfassen, deren N Drahtschichten parallel gewickelt sind, wobei bei der Spule, deren N Drahtschichten parallel gewickelt sind, die Eingänge der Drähte aller Schichten miteinander verbunden sind und die Ausgänge der Drähte aller Schichten miteinander verbunden sind.

4. Drahtlose Ladespule nach Anspruch 2 oder 3, wobei die verbleibenden Spulen die Spule umfassen, deren N Drahtschichten in Reihe gewickelt sind, wobei die Spule, deren N Drahtschichten in Reihe gewickelt sind, umfasst: in den N Drahtschichten ist ein Ausgang eines Drahtes einer x^{ten} Schicht mit einem Eingang eines Drahtes einer (x+1)^{ten} Schicht verbunden, wobei 1≤x≤N-1.

5. Drahtlose Ladespule nach Anspruch 2 oder 3, wobei die verbleibenden Spulen mindestens zwei Spulen umfassen, deren N Drahtschichten in Reihe gewickelt sind und die nacheinander von einer inneren Schleife zu einer äußeren Schleife oder von der äußeren Schleife zu der inneren Schleife verbunden sind, wobei eine erste Spule der mindestens zwei Spulen, deren N Drahtschichten in Reihe gewickelt sind, eine erste N Drahtschichten umfasst und eine zweite Spule der mindestens zwei Spulen, deren N Drahtschichten in Reihe gewickelt sind, eine zweite N Drahtschichten umfasst, ein Ausgang eines Drahtes einer x^{ten} Schicht der ersten N Drahtschichten mit einem Eingang eines Drahtes einer x^{ten} Schicht der zweiten N Drahtschichten verbunden ist, ein Ausgang des Drahtes an der x^{ten} Schicht der zweiten N Drahtschichten mit einem Eingang eines Drahtes einer (x+1)^{ten} Schicht der zweiten N Drahtschichten verbunden ist und ein Ausgang des Drahtes an der (x+1)^{ten} Schicht der zweiten N Drahtschichten mit einem Eingang eines Drahtes einer (x+1)^{ten} Schicht der ersten N Drahtschichten verbunden ist, wobei 1≤x≤N-1.

6. Drahtlose Ladespule nach einem der Ansprüche 1 bis 5, wobei eine Form der K Spulen umfasst: einen Kreis, eine Ellipse, eine Rennbahnform, ein Rechteck oder ein Dreieck.

7. Drahtlose Ladespule nach einem der Ansprüche 1 bis 6, wobei jede Schicht der N Drahtschichten einen Draht oder eine Mehrzahl von Drähten umfasst.

8. Drahtlose Ladespule nach einem der Ansprüche 1 bis 7, wobei zwischen zwei benachbarten Schichten der N Drahtschichten eine Isolierschicht angeordnet ist.

9. Elektronische Vorrichtung (100), wobei die elektronische Vorrichtung die drahtlose Ladespule nach einem der Ansprüche 1 bis 8 umfasst.

10. Kommunikationssystem (10), umfassend eine Ladevorrichtung (200) und ein Endgerät (100), wobei die Ladevorrichtung die drahtlose Ladespule (230) nach einem der Ansprüche 1 bis 8 umfasst, das Endgerät die drahtlose Ladespule nach einem der Ansprüche 1 bis 8 umfasst und die drahtlose Ladespule der Ladevorrichtung dazu konfiguriert ist, ein Signal an die drahtlose Ladespule des Endgeräts zu senden.

## Revendications

1. Bobine de charge sans fil, dans laquelle la bobine de charge sans fil comprend K bobines, une i^{ème} bobine a un diamètre d'enroulement plus grand qu'une (i+1)^{ème} bobine, et la (i+1)^{ème} bobine est située à l'intérieur de la i^{ème} bobine, où 1≤i≤K-1 ; et
chacune des K bobines comprend respectivement N couches de fils (121, 122, 123), et un fil au niveau d'une j^{ème} couche de la i^{ème} bobine est sur un même plan qu'un fil au niveau d'une j^{ème} couche de la (i+1)^{ème} bobine, où N≥j≥1,
**caractérisée en ce que**
les K bobines comprennent au moins deux bobines dont les N couches de fils sont bobinées en série-parallèle et qui sont connectées séquentiellement d'une boucle intérieure vers une boucle extérieure ou de la boucle extérieure vers la boucle intérieure, dans lesquelles une première bobine desdites au moins deux bobines dont les N couches de fils sont bobinées en série-parallèle comprend une première série de N couches de fils et une seconde bobine desdites au moins deux bobines dont les N couches de fils sont bobinées en série-parallèle comprend une seconde série de N couches de fils, une y^{ème} couche (122) de la première série de N couches de fils comprend au moins un premier fil (1221A) et un second fil (1221B), et une y^{ème} couche (122) de la seconde série de N couches de fils comprend au moins un troisième fil (1221A) et un quatrième fil (1221B) ; et
une sortie (1211b) d'un fil (1211) au niveau d'une (y-1)^{ème} couche (121) des N premières couches de fils est connectée à une entrée (1212a) d'un fil (1212) au niveau d'une (y-1)^{ème} couche (121) des N secondes couches de fils, une entrée (1211a) du fil (1211) au niveau de la (y-1)^{ème} couche (121) des N premières couches de fils est connectée à une entrée (1221Aa) du premier fil (1221A) au niveau de la y^{ème} couche (122) des N premières couches de fils, la sortie (1211b) du fil (1211) au niveau de la (y-1)^{ème} couche (121) des N premières couches de fils est connectée à une sortie (1211Ab) du premier fil (1211A) au niveau de la y^{ème} couche (122) des N premières couches de fils, l'entrée (1212a) du fil (1212) au niveau de la (y-1)^{ème} couche (121) des N secondes couches de fils est en outre connectée à une entrée (1222Aa) du troisième fil (1222A) au niveau de la y^{ème} couche (122) des N secondes couches de fils, une sortie (1212b) du fil (1212) au niveau de la (y-1)^{ème} couche (121) des N secondes couches de fils est connectée à une sortie (1222Ab) du troisième fil (1222A) au niveau de la y^{ème} (122) couche des N secondes couches de fils, la sortie (1212b') du fil (1212) au niveau de la (y-1)^{ème} couche (121) des N secondes couches de fils est en outre connectée à une entrée (1222Ba') du quatrième fil (1222B) au niveau de la y^{ème} couche (122) des N secondes couches de fils, une entrée (1222Ba) du second fil (1221B) au niveau de la y^{ème} couche (122) des N premières couches de fils est connectée à une entrée (1231a) d'un fil (1231) au niveau d'une (y+1)^{ème} couche (123) des N premières couches de fils, une sortie (1221Bb) du second fil (1221B) au niveau de la y^{ème} couche (122) des N premières couches de fils est connectée à une sortie (1231b) du fil (1231) au niveau de la (y+1)^{ème} couche (123) des N premières couches de fils, l'entrée (1222Ba) du quatrième fil (1222B) au niveau de la y^{ème} couche (122) des N secondes couches de fils est connectée à une entrée (1232a) d'un fil (1232) au niveau d'une (y+1)^{ème} couche (123) des N secondes couches de fils, une sortie (1222Bb) du quatrième fil (1222B) au niveau de la y^{ème} couche (122) des N secondes couches de fils est connectée à une sortie (1232b) du fil (1232) au niveau de la (y+1)^{ème} couche (123) des N secondes couches de fils, la sortie (1222Bb') du quatrième fil (1222B) au niveau de la y^{ème} couche (122) des N secondes couches de fils est en outre connectée à l'entrée (1231a') du fil (1231) au niveau de la (y+1)^{ème} couche (123) des N premières couches de fils, et la sortie du fil (1232) au niveau de la (y+1)^{ème} couche (123) des N secondes couches de fils est connectée à l'entrée du fil (1231) au niveau de la (y+1)^{ème} couche (123) des N premières couches de fils, où N>y>1.

2. Bobine de charge sans fil selon la revendication 1, dans laquelle les bobines restantes parmi les K bobines comprennent l'une ou plusieurs des bobines suivantes : une bobine dont les N couches de fils sont enroulées en parallèle, une bobine dont les N couches de fils sont enroulées en série, et une bobine dont les N couches de fils sont enroulées en série-parallèle.

3. Bobine de charge sans fil selon la revendication 2, dans laquelle les bobines restantes comprennent la bobine dont les N couches de fils sont enroulées en parallèle, dans laquelle, dans la bobine dont les N couches de fils sont enroulées en parallèle, les entrées des fils au niveau de toutes les couches sont connectées, et les sorties des fils au niveau de toutes les couches sont connectées.

4. Bobine de charge sans fil selon la revendication 2 ou 3, dans laquelle les bobines restantes comprennent la bobine dont les N couches de fils sont enroulées en série, dans laquelle la bobine dont les N couches de fils sont enroulées en série comprend : dans les N couches de fils, une sortie d'un fil au niveau d'une couche x^{th} est connectée à une entrée d'un fil au niveau d'une couche (x+1)^{th}, où 1≤x≤N-1.

5. Bobine de charge sans fil selon la revendication 2 ou 3, dans laquelle les bobines restantes comprennent au moins deux bobines dont les N couches de fils sont enroulées en série et qui sont connectées séquentiellement d'une boucle intérieure à une boucle extérieure ou de la boucle extérieure à la boucle intérieure, dans laquelle une première bobine des au moins deux bobines dont les N couches de fils sont enroulées en série comprend des premières N couches de fils et une deuxième bobine des au moins deux bobines dont les N couches de fils sont enroulées en série comprend des deuxièmes N couches de fils, une sortie d'un fil au niveau d'une couche x^{th} des premières N couches de fils est connectée à une entrée d'un fil au niveau d'une couche x^{th} des deuxièmes N couches de fils, une sortie du fil au niveau de la couche x^{th} des deuxièmes N couches de fils est connectée à une entrée d'un fil au niveau d'une couche (x+1)^{th} des deuxièmes N couches de fils, et une sortie du fil au niveau de la couche (x+1)^{th} des deuxièmes N couches de fils est connectée à une entrée d'un fil au niveau d'une couche (x+1)^{th} des premières N couches de fils, où 1≤x≤N-1.

6. Bobine de charge sans fil selon l'une quelconque des revendications 1 à 5, dans laquelle une forme des K bobines comprend : un cercle, une ellipse, un circuit, un rectangle ou un triangle.

7. Bobine de charge sans fil selon l'une des revendications 1 à 6, dans laquelle chaque couche des N couches de fils comprend un fil ou une pluralité de fils.

8. Bobine de charge sans fil selon l'une quelconque des revendications 1 à 7, dans laquelle une couche isolante est disposée entre deux couches adjacentes des N couches de fils.

9. Dispositif électronique (100), dans lequel le dispositif électronique comprend la bobine de charge sans fil selon l'une quelconque des revendications 1 à 8.

10. Un système de communication (10), comprenant un dispositif de charge (200) et un terminal (100), dans lequel le dispositif de charge comprend la bobine de charge sans fil (230) selon l'une quelconque des revendications 1 à 8, le terminal comprend la bobine de charge sans fil selon l'une quelconque des revendications 1 à 8, et la bobine de charge sans fil du dispositif de charge est configurée pour envoyer un signal à la bobine de charge sans fil du terminal.
